# EUROPEAN PATENT SPECIFICATION

(11) **EP 2 711 383 B1**
(45) Date of publication and mention of the grant of the patent: **04.07.2018**
(21) Application number: 12785521.1
(22) Date of filing: 15.05.2012
(51) Int. Cl.: C08G 63/85

(54) **CATALYST SOLUTION FOR USE IN PRODUCTION OF POLYESTER, AND METHOD FOR PRODUCING POLYESTER RESIN USING SAME**
KATALYSATORLÖSUNG ZUR VERWENDUNG BEI DER HERSTELLUNG EINES POLYESTERS UND VERFAHREN ZUR HERSTELLUNG EINES POLYESTERHARZES DAMIT
SOLUTION DE CATALYSEUR DESTINÉE À ÊTRE UTILISÉE DANS LA PRODUCTION DE POLYESTER, ET PROCÉDÉ DE PRODUCTION DE RÉSINE POLYESTER UTILISANT UNE TELLE SOLUTION

(30) Priority: 18.05.2011 JP 2011110923; 29.11.2011 JP 2011259854
(43) Date of publication of application: 26.03.2014
(73) Proprietor: Toray Industries, Inc., Tokyo 103-8666 (JP)
(72) Inventor: MAKINO, Masataka, Nagoya-shi Aichi 455-8502 (JP); TOJO, Yusuke, Nagoya-shi Aichi 455-8502 (JP); KUMAZAWA, Sadanori, Nagoya-shi Aichi 455-8502 (JP)
(74) Representative: Webster, Jeremy Mark
(86) International application number: PCT/JP2012/003168
(87) International publication number: WO 2012/157258

(56) References cited:
- EP-A1- 1 640 398
- WO-A1-2004/111105
- JP-A- 2006 002 068
- JP-A- 2009 235 288
- JP-A- 2010 126 614
- JP-A- 2010 132 930
- JP-A- 2010 195 934
- US-A- 3 444 139

## Description

### Technical Field

The present invention relates to a catalyst solution for polyester production, as well as to a polyester resin produced by using the same and a production method of a polyester resin using the same.

### Background Art

Polyester resins such as polyethylene terephthalate (PET) and polybutylene terephthalate (PBT) have excellent mechanical properties, heat resistance, moldability and recyclability, high mechanical strength and excellent chemical resistance and are widely applied for molded products, films and fibers. Especially PBT is widely used as the material of molded products for industrial articles, such as connectors, relays and switches of automobiles and electric and electronic equipment.

The polyester resin used in these applications is generally produced by direct polymerization method or transesterification method. The direct polymerization method obtains an oligomer, which is the precursor of a polyester resin, by direct esterification reaction of a dicarboxylic acid and a diol and subsequently produces the polyester resin by polycondensation of the oligomer under ordinary pressure or under reduced pressure. The transesterification method, on the other hand, obtains an oligomer, which is the precursor of a polyester resin, by transesterification reaction of an ester derivative of a dicarboxylic acid and a diol and subsequently produces the polyester resin by polycondensation of the oligomer under ordinary pressure or under reduced pressure.

Antimony compounds, germanium compounds and titanium compounds are conventionally used as catalysts for polyester production in industrial applications. The titanium compounds have the higher activity than the antimony compounds and the germanium compounds, but have the problem of yellowing of the resulting polyester resin due to the extremely high activity. Additionally, organic titanium compounds, such as titanates, have excellent catalytic activity but have the fundamental problems of being easily hydrolyzed by water and being likely to be deactivated. When a titanate is used as the catalyst, foreign substances are caused by the residue of the catalyst hydrolyzed by water. This causes defects, i.e., deterioration of transparency with respect to polymers in the molten state and deterioration of solution haze with respect to polymers in the solution state. In extreme cases of these defects, they cause degradation of the strength of molded products or fibers. Improvement has accordingly been demanded.

Various methods have been proposed with respect to the production method of the polyester resin using a titanium compound as the catalyst. For example, Patent Document 1 has proposed a polymerization catalyst for polyester production, which has the particle diameter of not less than 0.1 µm but not greater than 10 µm and is obtained in the form of a suspension by adding monobutyl phosphate and titanium tetrabutoxide to ethylene glycol having pH adjusted to be not greater than 4.1. In another example, Patent Document 2 has proposed a production method of polyester using a phosphate of a group IV element having the mean particle diameter of not greater than 10 µm as the polymerization catalyst. The polyesters produced by using the polyester polymerization catalysts obtained by these proposed techniques, however, have large amounts of foreign substances. Further improvement has accordingly been demanded. In another example, Patent Document 3 has proposed a catalyst for polyester production produced by adding tetra-n-butyl titanate and 1.2 to 4.0 times moles of 2-pyridine methanol (2-hydroxymethyl pyridine) of the titanium compound. Using the catalyst for polyester production obtained by this proposed technique enables production of a polymer having few foreign substances but still has a problem of color tone. Further improvement has accordingly been demanded. In another example, Patent Document 4 has proposed a catalyst for polymerizing polyester including a titanium compound and a phosphorus compound mixed in a solvent having pH= 4 to 6. The production process of the catalyst for polymerizing polyester obtained by this proposed technique is, however, complicated, which results in a requirement for the simpler method, and has only little effect of reducing foreign substances. Further improvement has accordingly been demanded. In another example, Patent Document 5 has proposed a catalyst suspension produced by adding tetra-n-butoxytitanium having pH of 1.0 to 4.0 and a phosphorus compound to ethylene glycol. This, however, causes a large amount of foreign substances included in the resulting polyester resin. Further reduction in content of foreign substances has accordingly been demanded. In another example, Patent Document 6 has proposed a polyester polymerization catalyst that includes a titanium compound and a magnesium compound and has the pH of not greater than 7. This, however, has little effect of reducing foreign substances. Further improvement has accordingly been demanded.

### Prior Art Documents

### Patent Documents:

Patent Document 1: JP 2011-168635A (Claims and Examples)
Patent Document 2: JP 2002-308973A (Claims and Examples)
Patent Document 3: JP 2002-284869A (Claims and Examples)
Patent Document 4: JP 2004-189962A (Claims and Examples)
Patent Document 5: JP 2008-195845A (Claims and Examples)
Patent Document 6: JP 2004-292803A (Claims and Examples)

### Summary of the Invention

### Problems to be Solved by the Invention

The object of the invention is to provide a catalyst solution for polyester production, which enables production of a polyester resin having few foreign substances, a polyester resin produced by using the same and a production method of a polyester resin using the same.

### Means for Solving the Problems

The inventors have found a catalyst solution for polyester production, which enables production of a polyester resin having few foreign substances, a polyester resin produced by using the same and a production method of a polyester resin using the same and have achieved the present invention as the result of intensive studies in order to solve the problems described above. In other words, the present invention is made to solve at least part of the foregoing, and embodiments of the present invention may include at least part of the following configurations.

According to one embodiment of the invention, there is provided a catalyst solution for polyester production, comprising a titanium compound (A) and an organic solvent (B),
the catalyst solution further comprising a compound (C) that has either a pyrrole ring or a pyridine ring and includes one or more oxygen atoms, wherein
particle diameter of particles included in the solution, which is measured by dynamic light scattering method and is subsequently determined by cumulant analysis method, is not greater than 200 nm.

### Advantageous Effects of the Invention

The present invention enables production of a catalyst solution for polyester production having excellent long term stability and enables production of a polyester resin, which has excellent color tone and few foreign substances, by using this catalyst solution for polyester production.

### Mode for Carrying Out the Invention

The following describes embodiments according to the invention in detail.

A catalyst solution for polyester production according to an embodiment of the invention includes a catalyst solution for polyester production, comprising a titanium compound (A) and an organic solvent (B),
the catalyst solution further comprising a compound (C) that has either a pyrrole ring or a pyridine ring and includes one or more oxygen atoms, wherein
particle diameter of particles included in the solution, which is measured by dynamic light scattering method and is subsequently determined by cumulant analysis method, is not greater than 200 nm.

The value measured by the dynamic light scattering method and subsequently determined by the cumulant analysis method indicates the diameter of particles in the catalyst solution for polyester production. The value of 0 nm means the absence of particles. According to the invention, the particles are catalyst-induced particles. When particles are included in the catalyst solution for polyester production and the diameter of these particles increases to be greater than about 200 nm, foreign substances are formed in a polyester resin produced by using the catalyst solution for polyester production. Specifically, the foreign substance herein means insoluble substance by coarsening the catalyst-induced particles. The smaller particle diameter results in the less number of foreign substances included in the resulting polyester resin, so that the particle diameter is preferably not greater than 150 nm, is more preferably not greater than 100 nm, is furthermore preferably not greater than 80 nm, is especially preferably not greater than 50 nm, and is most preferably 0 nm, which means detection of no particles. Moreover, the smaller particle diameter has the advantageous effect of improving the long term stability of the catalyst solution for polyester production.

According to an embodiment of the invention, in order to make the particle diameter not greater than 200 nm, it is preferable to adequately set up one or more conditions among a plurality of conditions including: for example, controlling the content of the titanium compound (A) in the catalyst solution for polyester production to be not greater than 20.0% by weight; using 1,4-butanediol as the organic solvent (B); containing a compound (C) having a nitrogen atom-containing aromatic heterocyclic structure in the catalyst solution for polyester production; using the organic solvent (B) having pH adjusted to be not greater than 3.5 or to be not less than 10.5; and employing a production method described later for production.

A compound (C) having a nitrogen atom-containing aromatic heterocyclic structure is contained in the catalyst solution for polyester production in order to make the particle diameter not greater than 200 nm, and the nitrogen atom-containing heterocyclic structure of the compound (C) is either a pyrrole ring or a pyridine ring and includes one or more atoms other than nitrogen having an unshared electron pair, wherein one of the atoms having the unshared electron pair is oxygen atom. According to an especially preferable embodiment herein, the production method described later is employed for production using the catalyst solution for polyester production having the molar ratio (C/A) of the content of the compound (C) to the content of the titanium compound (A) is not less than 0.01 but less than 1.0. The molar ratio (C/A) of the content of the compound (C) to the content of the titanium compound (A) may, however, be less than 0.01 or may be not less than 1.0.

The particle diameter according to the embodiment of the invention may be determined by the following method. A "zeta potential and particle size measurement system ELS-Z" manufactured by Otsuka Electronics Co., Ltd is used for measurement. The method places the catalyst solution for polyester production including the titanium compound (A), the organic solvent (B) and the compound (C) in a rectangular cell for particle diameter measurement. The scattering intensity is measured 70 times at 25°C by the dynamic light scattering method on the assumption that the index of refraction of the organic solvent (B) used is the index of refraction of the solvent. The particle diameter is then determined by analyzing the scattering intensity obtained as described above by the cumulant analysis method. When any particles are present in the catalyst solution for polyester production, the value determined by this method is substantially equivalent to the mean value of the diameter of the particles. The value of 0 nm indicates the absence of particles. It is also noted that the dynamic light scattering measurement is performed after elapse of 30 minutes since preparation of the catalyst solution for polyester production including the titanium compound (A), the organic solvent (B) and the compound (C).

The catalyst solution for polyester production according to the embodiment of the invention includes the titanium compound (A), so as to shorten the reaction time of an esterification reaction or the reaction time of a transesterification reaction and/or the reaction time of a polycondensation reaction. In terms of shortening the reaction time of the esterification reaction or the reaction time of the transesterification reaction and/or the reaction time of the polycondensation reaction, the titanium compound (A) contained in the catalyst solution for polyester production according to the embodiment of the invention is preferably a titanate or its condensation product having the structure shown by a formula: (R¹O)ₙTi(OR²)₄₋ₙ in the catalyst solution for polyester production (in the forma herein, R¹ and R² may be identical with or different from each other and respectively represent an aliphatic, alicyclic or aromatic hydrocarbon group containing 1 to 10 carbon atoms, wherein n indicates a range of 0 to 4 (including decimals)). The titanium compound (A) described above should be included in the catalyst solution for polyester production, prior to the use of the catalyst solution. Moreover, in terms of shortening the reaction time of the esterification reaction or the reaction time of the transesterification reaction and/or the reaction time of the polycondensation reaction, it is preferable to produce the catalyst solution using the titanium compound that is either the titanate or its condensation product having the above structure and to produce the polyester resin using this catalyst solution. The catalyst solution for polyester production according to the embodiment of the invention may, however, contain a compound different from the titanate or its condensation product having the above structure, as the titanium compound (A).

Concrete examples of the titanate shown by the above formula include; tetramethoxytitanium, tetra-n-propoxytitanium, tetra-n-butoxytitanium, tetraisopropoxytitanium, tetraisobutoxytitanium, tetra-tert-butoxytitanium, cyclohexyl ester of titanic acid, phenyl ester of titanic acid, benzyl ester of titanic acid, tolyl ester of titanic acid and mixed esters of the foregoing. The titanate may contain two or more different esters among these esters. In terms of enabling efficient production of the polyester resin, among them, tetra-n-propoxytitanium, tetra-n-butoxytitanium and tetraisopropoxytitanium are preferable. Moreover, in term of enabling further reduction of foreign substances in the resulting polyester resin, tetra-n-butoxytitanium is used preferably.

The content of the titanium compound (A) in the catalyst solution for polyester production according to the embodiment of the invention is preferably not greater than 50% by weight, is specifically preferably not greater than 30% by weight in terms of the excellent long term stability of the catalyst solution for polyester production and is furthermore preferably not greater than 20% by weight. Moreover, in terms of enabling further reduction of foreign substances in the resulting polyester resin, the content of the titanium compound (A) is preferably not greater than 10% by weight, furthermore preferably not greater than 1.0% by weight and is especially preferably not greater than 0.5% by weight. In terms of enabling production of the catalyst solution for polyester production having the high polymerizability, the lower limit value of the content of the titanium compound (A) is preferably not less than 0.005% by weight and is furthermore preferably not less than 0.01% by weight. Moreover, in terms of reducing the amount of a byproduct, tetrahydrofuran (THF), due to cyclization of 1,4-butanediol in the course of the esterification reaction or the transesterification reaction, the content of the titanium compound (A) is especially preferably not less than 0.03% by weight.

The catalyst solution for polyester production according to the embodiment of the invention includes the organic solvent (B), so as to prevent deactivation due to hydrolysis of the titanium compound (A) and shorten the reaction time of the esterification reaction or the reaction time of the transesterification reaction and/or the reaction time of the polycondensation reaction. In terms of the excellent long term stability of the catalyst solution for polyester production, the organic solvent (B) used according to the embodiment of the invention is preferably an alcohol shown by a formula: R³(OH)ₘ (in the forma herein, R³ represents an aliphatic, alicyclic or aromatic hydrocarbon group or a heterocyclic ring containing 1 to 10 carbon atoms, wherein m indicates either 1 or 2). The catalyst solution for polyester production according to the embodiment of the invention may, however, contain an organic solvent different from the alcohol having the above structure, as the organic solvent (B).

Concrete examples of the alcohol shown by the above forma include: aliphatic alcohols such as methanol, ethanol, n-propanol, n-butanol, n-pentanol, n-hexanol, n-heptanol, n-octanol, n-nonanol and n-decanol; aliphatic diols such as ethylene glycol, 1,2-propanediol, 1,3-propanediol, 1,4-butanediol, 1,5-pentanediol, 1,6-hexanediol, 1,7-heptanediol, 1,8-octanediol, 1,9-nonanediol, 1,10-decanediol, neopentyl glycol and diethylene glycol; alicyclic alcohols such as cyclopentanol, cyclohexanol and cyclohexane methanol; alicyclic diols such as cyclopentanediol, 1,2-cyclohexanediol, 1,4-cyclohexanediol, 1,2- cyclohexane dimethanol and 1,4-cyclohexane dimethanol; heterocyclic diols such as isosorbide, isomannide and isoidide; and aromatic alcohols such as benzyl alcohol and methyl benzyl alcohol; and aromatic diols such as 1,4-benzene dimethanol, 1,4-benzene diethanol, 1,4-bis(2-hydroxyethoxy)benzene. The alcohol may contain two or more different alcohols among these alcohols. In terms of enabling production of the catalyst solution for polyester production having the high polymerizability, it is preferable to use one or more of the raw materials of polyester resin, i.e., ethylene glycol, 1,3-propanediol, 1,4-butanediol, 1,4-cyclohexane dimethanol among them, as the alcohol shown by the above forma. Moreover, in terms of enabling further reduction of foreign substances in the resulting polyester resin, it is especially preferable to use 1,4-butanediol, as the alcohol shown by the above formula. The alcohol shown by the above formula herein may be either fossil resource-derived or biomass resource-derived.

As the combination of the titanium compound (A) and the organic solvent (B) used in the catalyst solution for polyester production according to the embodiment of the invention, it is preferable to use a combination selected among tetra-n-propoxytitanium and ethylene glycol, tetra-n-butoxytitanium and ethylene glycol, tetraisopropoxytitanium and ethylene glycol, tetra-n-propoxytitanium and 1,3-propanediol, tetra-n-butoxytitanium and 1,3-propanediol, tetraisopropoxytitanium and 1,3-propanediol, tetra-n-propoxytitanium and 1,4-butanediol, tetra-n-butoxytitanium and 1,4-butanediol, tetraisopropoxytitanium and 1,4-butanediol, tetra-n-propoxytitanium and 1,4-cyclohexane dimethanol, tetra-n-butoxytitanium and 1,4-cyclohexane dimethanol and tetraisopropoxytitanium and 1,4-cyclohexane dimethanol. In terms of enabling production of the catalyst solution for polyester production for shortening the reaction time of the esterification reaction or the reaction time of the transesterification reaction and the reaction time of the polycondensation reaction, it is more preferable to use a combination selected among tetra-n-propoxytitanium and 1,4-butanediol, tetra-n-butoxytitanium and 1,4-butanediol, tetraisopropoxytitanium and 1,4-butanediol. Moreover, in terms of enabling production of the polyester resin having the further reduced foreign substances, it is most preferable to use the combination of tetra-n-butoxytitanium and 1,4-butanediol.

The catalyst solution for polyester production according to the embodiment of the invention contains the compound (C) having the nitrogen atom-containing aromatic heterocyclic structure, so as to stabilize the catalyst and reduce the particle diameter of catalyst-induced particles included in the catalyst solution for polyester production, thus enabling reduction of foreign substances and significantly reducing foreign substances included in the polyester resin produced by using the catalyst solution for polyester production. The foreign substance herein means catalyst-induced insoluble substance occurring in the polyester resin. Using the catalyst solution for polyester production containing the compound (C) can reduce such insoluble substance included in the polyester resin produced by using the catalyst solution for polyester production.

Concrete examples of the nitrogen atom-containing aromatic heterocyclic structure of the compound (C) described herein include pyrrole ring, pyridine ring, indole ring, isoindole ring, quinoline ring, isoquinoline ring, imidazole ring, pyrazole ring, oxazole ring, isoxazole ring, thiazole ring, isothiazole ring, pyrazine ring, pyridazine ring, benzimidazole ring, indazole ring, benzoxazole ring, benzisoxazole ring, benzothiazole ring, benzisothiazole ring, quinoxaline ring, quinazoline ring, cinnoline ring and phthalazine ring. In terms of the more excellent color tone of the resulting polyester resin, the nitrogen atom-containing aromatic heterocyclic structure described herein may be selected among pyrrole ring, pyridine ring, indole ring, isoindole ring, quinoline ring, isoquinoline ring, imidazole ring, pyrazole ring, pyrazine ring, pyridazine ring, benzimidazole ring, indazole ring, quinoxaline ring, quinazoline ring, cinnoline ring and phthalazine ring. Also described herein is the nitrogen atom-containing aromatic heterocyclic structure selected among pyrrole ring, pyridine ring, indole ring, isoindole ring, quinoline ring and isoquinoline ring. The nitrogen atom-containing aromatic heterocyclic structure according to the invention is selected between pyrrole ring and pyridine ring. Moreover, in terms of enabling further reduction in amount of foreign substances in the polyester resin, the pyridine ring is most preferable.

The compound (C) preferably includes one or more atoms other than nitrogen having an unshared electron pair. Concrete examples of the atom having the unshared electron pair described herein include nitrogen atom, oxygen atom, phosphorus atom and sulfur atom. The compound (C) described herein may contain two or more different atoms among these atoms having the unshared electron pair. In terms of enabling production of the polyester resin having the excellent color tone and the excellent mechanical properties, nitrogen atom or oxygen atom is more preferable among them, as the atom having the unshared electron pair. In terms of enabling further reduction of foreign substances in the resulting polyester resin, the compound (C) according to the invention includes one or more oxygen atom.

According to an embodiment of the invention, the compound (C) having the nitrogen atom-containing aromatic heterocyclic structure that is either a pyrrole ring or a pyridine ring and includes one or more atoms other than nitrogen having an unshared electron pair, wherein one of the atoms having the unshared electron pair is oxygen atom, is preferably a compound having at least one of hydrogen atoms in the nitrogen atom-containing aromatic heterocyclic ring such as the pyrrole ring or the pyridine ring, substituted with a group shown by a formula -R⁴OH (in the formula herein, R⁴ represents an aliphatic hydrocarbon group containing 1 to 3 carbon atoms). In the above formula, oxygen atom in the hydroxy group is the atom having the unshared electron pair. Concrete examples of the compound having this structure include 1-hydroxymethyl pyrrole, 1-hydroxyethyl pyrrole, 1-hydroxypropyl pyrrole, 2-hydroxymethyl pyrrole, 2-hydroxyethyl pyrrole, 2-hydroxypropyl pyrrole, 3-hydroxymethyl pyrrole, 3-hydroxyethyl pyrrole, 3-hydroxypropyl pyrrole, 1-hydroxymethyl pyridine, 1-hydroxyethyl pyridine, 1-hydroxypropyl pyridine, 2-hydroxymethyl pyridine, 2-hydroxyethyl pyridine, 2-hydroxypropyl pyridine, 3-hydroxymethyl pyridine, 3-hydroxyethyl pyridine, 3-hydroxypropyl pyridine, 4-hydroxymethyl pyridine, 4-hydroxyethyl pyridine and 4-hydroxypropyl pyridine. The compound (C) may contain two or more different compounds among these compounds. In terms of the excellent mechanical properties of the polyester resin, preferable are one or more different compounds selected among 1-hydroxymethyl pyrrole, 1-hydroxyethyl pyrrole, 1-hydroxypropyl pyrrole, 2-hydroxymethyl pyridine, 2-hydroxyethyl pyridine and 2-hydroxypropyl pyridine. Moreover, in terms of enabling further reduction of foreign substances in the polyester resin, especially preferable are one or more different compounds selected between 1-hydroxypropyl pyrrole and 2-hydroxymethyl pyridine, and most preferable is 2-hydroxymethyl pyridine.

In terms of producing the catalyst solution for polyester production having the excellent long term stability according to the embodiment of the invention and enabling further reduction in amount of foreign substances included in the polyester resin produced by using the catalyst solution for polyester production according to the embodiment of the invention, the molar ratio (C/A) of the content of the compound (C) to the content of the titanium compound (A) is preferably not less than 0.01 and is more preferably not less than 0.1. In terms of enabling further reduction in amount of foreign substances included in the polyester resin, on the other hand, the molar ratio (C/A) of the content of the compound (C) to the content of the titanium compound (A) is preferably less than 1.0, is more preferably not greater than 0.75, is furthermore preferably not greater than 0.5 and is especially preferably not greater than 0.3.

The following describes methods of producing the catalyst solution for polyester production containing the compound (C) according to the embodiment of the invention.

The production method of the catalyst solution for polyester production preferably adds the titanium compound (A) of the specific amount described above after mixing the organic solvent (B) and the compound (C) described above with each other and adjusting the water content of the mixed solution to be not greater than 0.05% by weight. Addition of the titanium compound (A) after adjustment of the water content to be not greater than 0.05% by weight enables reduction of the particle diameter in the catalyst solution for polyester production and may achieve even the absence of particles according to a preferred embodiment. This accordingly enables further reduction in amount of foreign substances included in the resulting polyester resin. In terms of enabling further reduction of the particle diameter of the particles included in the catalyst solution for polyester production and further reduction of catalyst-induced foreign substances, the water content in the mixed solution of the organic solvent (B) and the compound (C) described above is preferably not greater than 0.03% by weight. For example, a method of heating and stirring the mixed solution at 150°C under nitrogen stream may be employed as the method of adjusting the water content. The water content according to the embodiment of the invention may be determined by using a trace moisture measurement device of Karl-Fischer coulometric titration system.

Additionally, the production method preferably adds the titanium compound (A) after adjusting the temperature of the mixed solution of the organic solvent (B) and the compound (C) to be not higher than 100°C. Addition of the titanium compound (A) after adjustment of the temperature of the mixed solution to be not higher than 100°C enables reduction of the particle diameter in the catalyst solution for polyester production and may achieve even the absence of particles according to a preferred embodiment. This accordingly enables further reduction in amount of foreign substances included in the resulting polyester resin. In terms of enabling further reduction of the particle diameter of the particles included in the catalyst solution for polyester production and reduction of catalyst-induced foreign substances, the temperature of the mixed solution is preferably not higher than 80°C and is especially preferably not higher than 60°C. In terms of the operability of the organic solvent (B), the lower limit value is preferably not lower than 30°C. For example, a method of cooling the mixed solution at room temperature may be employed as the method of adjusting the temperature of the mixed solution. This temperature adjustment and the adjustment of the water content described above may be performed successively in any order or may be performed simultaneously, but it is preferable to adjust the temperature after adjustment of the water content. For example, the mixed solution after adjustment of the water content may be cooled at room temperature, so as to have the temperature adjusted to a desired temperature.

The method and the conditions of mixing the organic solvent (B) and the compound (C) are not specifically limited as long as the water content of the mixed solution is in the range described above, and any of known mixing methods and conditions may be employed. Additionally, the method and conditions of adding the titanium compound (A) are not specifically limited as long as the water content and the temperature of the mixed solution of the organic solvent (B) and the compound (C) are adjusted to the ranges described above, and any of known addition methods and conditions may be employed.

It is also not essential that the catalyst solution for polyester production produced by the method according to the embodiment of the invention includes the compound (C). When the catalyst solution for polyester production does not include the compound (C), in terms of enabling reduction of the particle diameter in the resulting catalyst solution for polyester production and achieving even the absence of particles so as to reduce catalyst-induced foreign substances, the titanium compound (A) is mixed with the organic solvent (B) after adjustment of the pH of the organic solvent (B) to be not greater than 3.5 or to be not less than 10.5 and more preferably after adjustment of the pH to be not greater than 2.0 or to be not less than 12.5. Moreover, in terms of reducing the amount of the by-product THF due to cyclization of 1,4-butanediol in the course of the esterification reaction or the transesterification reaction and shortening the reaction time of the polycondensation reaction, it is especially preferable to adjust the pH of the organic solvent (B), which is to be mixed with the titanium compound (A), to the range of 1.0 to 2.0. When the catalyst solution for polyester production according to the embodiment of the invention does not include the compound (C), however, the pH of the organic solvent (B) before being mixed with the titanium compound (A) may be adjusted to be greater than 3.5 and less than 10.5.

The pH of the organic solvent (B) according to the embodiment of the invention may be measured at the temperature of 25°C by using a known pH meter, which has been calibrated with standard solutions of phthalate (pH 4.01), neutral phosphate (pH 6.86) and borate (pH 9.18).

A preferable method of pH adjustment of the organic solvent (B) according to the embodiment of the invention prepares an aqueous solution of at least one acid selected among inorganic acids and organic acids or an aqueous solution of at least one base selected among inorganic bases and organic bases and adds the prepared aqueous solution to the organic solvent (B).

Concrete examples of the inorganic acid include hydrochloric acid, sulfuric acid and nitric acid. Concrete examples of the organic acid include: saturated aliphatic monocarboxylic acids such as acetic acid, propionic acid, butyric acid, hexanoic acid, stearic acid and behenic acid and their anhydrides; saturated aliphatic dicarboxylic acids such as oxalic acid, malonic acid, succinic acid, glutaric acid, adipic acid, pimelic acid, suberic acid, azelaic acid and sebacic acid and their anhydrides; unsaturated aliphatic dicarboxylic acids such as maleic acid and fumaric acid and their anhydrides; aliphatic polycarboxylic acids such as tricarballylic acid and their anhydrides; alicyclic dicarboxylic acids such as hexahydrophthalic acid and hexahydroisophthalic acid and their anhydrides; aromatic monocarboxylic acids such as benzoic acid and t-butyl benzoic acid and their anhydrides; aromatic dicarboxylic acids such as phthalic acid, isophthalic acid, dibromoisophthalic acid, sodium sulfoisophthalate, terephthalic acid, phenylenedioxydicarboxylic acid, 4,4'-diphenyldicarboxylic acid, 4,4'-diphenyletherdicarboxylic acid, 4,4'-diphenylketonedicarboxylic acid, 4,4'-diphenoxyethanedicarboxylic acid, 4,4'-diphenylsulfonedicarboxylic acid, and 2,6-naphthalenedicarboxylic acid and their anhydrides; aromatic polycarboxylic acids such as trimellitic acid, trimesic acid and pyromellitic acid and their anhydrides; hydroxycarboxylic acids such as glycolic acid, lactic acid, citric acid, gallic acid, p-hydroxybenzoic acid, p-β-hydroxyethoxybenzoic acid; and alkoxycarboxylic acids. Two or more different acids among these acids may be used in combination. Among these acids, in terms of the operability, the inorganic acid is preferable, and hydrochloric acid is especially preferable.

Concrete examples of the inorganic base include; alkali metal hydroxides such as sodium hydroxide, potassium hydroxide and lithium hydroxide; alkaline earth metal hydroxides such as calcium hydroxide and barium hydroxide; and hydroxides of amine complexes such as diamminesilver(I) hydroxide and tetraamminecopper(II) hydroxide. Concrete examples of the organic base include: amine compounds such as ethylamine, diethylamine and triethylamine; and heterocyclic compounds including nitrogen atoms, such as aziridine, azirine, azetidine, azolidine, azole and pyridine. Two or more different bases among these bases may be used in combination. Among these bases, in terms of the operability, the inorganic base is preferable, and sodium hydroxide is especially preferable.

The catalyst solution for polyester production according to the embodiment of the invention may contain a compound other than the compound (C) having the nitrogen atom-containing aromatic heterocyclic structure. The compound other than the compound (C) contained in the catalyst solution for polyester production may be, for example, a compound including one or more metal elements selected among group 2A metal elements in the periodic table, aluminum, manganese, iron, cobalt, zinc, gallium and germanium or a phosphorus compound. Two or more different compounds among these compounds may be used in combination. The content of this compound relative to the titanium compound (A) is not specifically limited. In terms of shortening the reaction time of the esterification reaction or the reaction time of the transesterification reaction and the reaction time of the polycondensation reaction and producing the polyester resin having few foreign substances, however, it is preferable that the catalyst solution for polyester production does not contain any compound including one or more metal elements selected among group 2A metal elements in the periodic table, aluminum, manganese, iron, cobalt, zinc, gallium and germanium and/or does not contain any phosphorus compound. In terms of shortening the reaction time of the esterification reaction or the reaction time of the transesterification reaction and the reaction time of the polycondensation reaction, it is especially preferable that the catalyst solution for polyester production does not contain any phosphorus compound.

The following describes the polyester resin according to an embodiment of the invention. The polyester resin according to the embodiment of the invention is obtainable by the esterification reaction of a dicarboxylic acid component (D-1) consisting of a dicarboxylic acid and a diol component (E) or the transesterification reaction of a dicarboxylic acid component (D-2) consisting of an ester derivative of a dicarboxylic acid and a diol component (E) and the subsequent polycondensation reaction. The polyester resin is obtainable by using the catalyst solution for polyester production according to the embodiment of the invention described above as the reaction catalyst of the esterification reaction or the transesterification reaction and/or the polycondensation reaction. According to an embodiment of the invention, a compound (F) having three or more functional groups may additionally be allowed to react, in order to give the high heat-resistant stability to the resulting polyester resin.

According to an embodiment of the invention, the dicarboxylic acid component forming the dicarboxylic acid unit of the polyester resin is the dicarboxylic acid component (D-1), which consists of an aromatic dicarboxylic acid, an aliphatic dicarboxylic and or a mixture thereof, or the dicarboxylic acid component (D-2), which consists of an ester derivative of a dicarboxylic acid. These dicarboxylic acid components may be fossil resource-derived or may be biomass resource-derived.

Examples of the above aromatic dicarboxylic acid include terephthalic acid, isophthalic acid, phthalic acid, 2,6-naphthalenedicarboxylic acid, 1,5-naphthalenedicarboxylic acid, bis(p-carboxyphenyl)methane, anthracenedicarboxylic acid, 4,4'-diphenyletherdicarboxylic acid and sodium 5-sulfoisophthalate. Examples of the above ester derivative of the aromatic dicarboxylic acid include lower alkyl esters of the above aromatic dicarboxylic acids: more specifically, methyl esters, ethyl esters, propyl esters and butyl esters. Two or more of the foregoing may be used in combination.

Examples of the above aliphatic dicarboxylic acid include aliphatic dicarboxylic acids such as oxalic acid, succinic acid, glutaric acid, adipic acid, sebacic acid, dodecanedioic acid and dimer acid; and alicyclic dicarboxylic acids such as 1,3-cyclohexanedicarboxylic acid and 1,4-cyclohexanedicarboxylic acid. Examples of the above ester derivative of the aliphatic dicarboxylic acid include lower alkyl esters of the above aliphatic dicarboxylic acids: more specifically, methyl esters, ethyl esters, propyl esters and butyl esters. Two or more of the foregoing may be used in combination.

Among them, in terms of producing the polyester resin having the excellent heat resistance and the excellent chemical resistance and enabling efficient production of the polyester resin, it is preferable to use an aromatic dicarboxylic acid. As the aromatic dicarboxylic acid, one or more of terephthalic acid, isophthalic acid and 2,6-naphthalenedicarboxylic acid are preferable, and terephthalic acid is especially preferably used.

When terephthalic acid is used as the dicarboxylic acid component, in terms of producing the polyester resin having the excellent heat resistance, the excellent mechanical properties and the excellent chemical resistance and enabling efficient production of the polyester resin, the ratio of terephthalic acid to the total dicarboxylic acid component is preferably not less than 50 mol%, is more preferably not less than 90 mol% and is most preferably equal to 100 mol%. According to another preferable embodiment, isophthalic acid or 2,6-naphthalenedicarboxylic acid may be used in combination as the aromatic dicarboxylic acid component other than terephthalic acid.

The diol component (E) according to the embodiment of the invention may be an aromatic diol, an aliphatic diol, an alicyclic diol, a heterocyclic diol, or a mixture thereof. These diol components (E) may be fossil resource-derived or may be biomass resource-derived.

Examples of the above aromatic diol include: bisphenol A derivatives with ethylene oxides such as polyoxyethylene(2.0)-2,2-bis(4-hydroxyphenyl)propane, polyoxyethylene(2.3)-2,2-bis(4-hydroxyphenyl)propane, polyoxyethylene(2.8)-2,2-bis(4-hydroxyphenyl)propane and polyoxyethylene(3.0)-2,2-bis(4-hydroxyphenyl)propane; and bisphenol A derivatives with propylene oxides such as polyoxypropylene(2.0)-2,2-bis(4-hydroxyphenyl)propane, polyoxypropylene(2.3)-2,2-bis(4-hydroxyphenyl)propane, polyoxypropylene(2.8)-2,2-bis(4-hydroxyphenyl)propane and polyoxypropylene(3.0)-2,2-bis(4-hydroxyphenyl)propane.

Examples of the above aliphatic diol include ethylene glycol, 1,2-propanediol, 1,3-propanediol, 1,4-butanediol, 1,5-pentanediol, 1,6-hexanediol, 1,7-heptanediol, 1,8-octanediol, 1,9-nonanediol, 1,10-decanediol, neopentyl glycol, diethylene glycol, polyethylene glycol, polypropylene glycol and polytetramethylene glycol.

Examples of the above alicyclic diol include cyclopentanediol, 1, 2-cyclohexanediol, 1,4-cyclohexanediol, 1,2-cyclohexanedimethanol and 1,4-cyclohexanedimethanol.

Examples of the above heterocyclic diol include isosorbide, isomannide and isoidide.

Two or more of these diols may be used in combination. Among them, in terms of producing the polyester resin having the excellent heat resistance and enabling efficient production of the polyester resin, it is preferable to use an aliphatic diol as the diol component (E). As the aliphatic diol, ethylene glycol, 1,3-propanediol, 1,4-butanediol and 1,4-cyclohexanedimethanol are preferable. In terms of producing the polyester resin having the excellent crystallization characteristics, the excellent moldability, the excellent heat resistance and the excellent chemical resistance and enabling efficient production of the polyester resin, 1,4-butanediol is especially preferably used.

When 1,4-butanediol is used as the diol component (E), in terms of producing the polyester resin having the excellent crystallization characteristics, the excellent moldability, the excellent heat resistance and the excellent mechanical properties and enabling efficient production of the polyester resin, the ratio of 1,4-butanediol to the total diol component is preferably not less than 50 mol%, is more preferably not less than 90 mol% and is most preferably equal to 100 mol%. According to another preferable embodiment, ethylene glycol, 1,3-propanediol or 1,4-cyclohexanedimehtanol may be used in combination as the diol component other than 1,4-butanediol.

The combination of the dicarboxylic acid component (D-1) and the diol component (E) in the polyester resin according to the embodiment of the invention may be terephthalic acid and ethylene glycol, terephthalic acid and 1,3-propanediol, terephthalic acid and 1,4-butanediol or terephthalic acid and 1,4-cyclohexanediol. The dicarboxylic acid component (D-2) consisting of the ester derivative of dicarboxylic acid may be used, in place of the dicarboxylic acid component (D-1). The dicarboxylic acid component (D-2) may be a lower alkyl ester, for example, methyl ester, ethyl ester, propyl ester or butyl ester of terephthalic acid. Two or more of the foregoing may be used in combination. Among them, in terms of producing the polyester resin having the excellent heat resistance and the excellent chemical resistance and enabling efficient production of the polyester resin, it is preferable to use an aromatic dicarboxylic acid as the dicarboxylic acid component (D-1). In terms of producing the polyester resin having the excellent heat resistance the excellent mechanical properties and the excellent chemical resistance, it is more preferable to use the combination of terephthalic acid and ethylene glycol or the combination of terephthalic acid and 1,4-butanediol. In other words, it is more preferable to select polyethylene terephthalate (PET) as the polyester resin or to select polybutylene terephthalate (PBT) as the polyester resin. In terms of producing the polyester resin having the excellent crystallization characteristics, the excellent moldability, the excellent heat resistance and the excellent chemical resistance, enabling efficient production of the polyester resin and enhancing the improvement effect on amount of foreign substances by the addition of the catalyst solution for polyester production according to the embodiment of the invention to the reaction system prior to the start of the esterification reaction and the polycondensation reaction, it is most preferable to use the combination of terephthalic acid and 1,4-butanediol. In other words, it is most preferable to select polybutylene terephthalate (PBT) as the polyester resin.

The polyester resin according to the embodiment of the invention uses terephthalic acid as the primary component of the dicarboxylic acid component (D-1) and may use isophthalic acid or 2,6-naphthalenedicarboxylic acid in combination. The polyester resin according to the embodiment of the invention may also be copolymerized polyester produced by using two or more different diol components in combination selected among ethylene glycol, 1,3-propanediol, 1,4-butanediol, 1,4-cyclohexanediol and polytetramethylene glycol as the diol component (E). According to a more preferable embodiment of the copolymerized polyester, in terms of producing the polyester resin having the excellent heat resistance, the excellent mechanical properties and the excellent chemical resistance and enabling efficient production of the polyester resin, the ratio of terephthalic acid to the total dicarboxylic acid component is preferably not less than 50 mol%, is more preferably not less than 90 mol% and is most preferably equal to 100 mol%. In terms of producing the polyester resin having the excellent crystallization characteristics, the excellent moldability, the excellent heat resistance and the excellent mechanical properties and enabling efficient production of the polyester resin, the polyester resin according to the embodiment of the invention preferably uses 1,4-butanediol as the primary component of the diol component. More specifically, the ratio of 1,4-butanediol to the total diol component is preferably not less than 50 mol%, is more preferably not less than 90 mol% and is most preferably equal to 100 mol%.

Examples of the compound (F) having three or more functional groups include: polyalcohols such as glycerol, diglycerol, trimethylolpropane, ditrimethylolpropane, pentaerythritol and dipentaerythritol; polyalcohols containing alkylene oxide unit such as (poly)oxyethylene glycerol, (poly)oxypropylene glycerol, (poly)oxyethylene trimethylolpropane, (poly)oxypropylene trimethylolpropane, (poly)oxyethylene pentaerythritol and (poly)oxypropylene pentaerythritol; polycarboxylic acids such as propane-1,2,3-tricarboxylic acid, trimellitic acid and trimesic acid and their acid anhydrides; and polycarboxylic acids containing alkylene oxide unit such as trimellitic acid including (poly)ethylene oxide unit and trimellitic acid including (poly)propylene oxide unit and their acid anhydrides.

According to a preferable embodiment, the polyester resin of the embodiment of the invention may additionally contain one conventional additive or two or more conventional additives in a range that does not interfere with achieving the object of the invention: for example, ultraviolet absorbers, light-resistant stabilizers, heat stabilizers, antioxidants (e.g., hindered phenol antioxidants, amine antioxidants and sulfur antioxidants), copper inhibitors, lubricants, mold releasing agents and coloring agents including dyes and pigments. More specifically, the color tone of the polyester resin is significantly improved by containing a phosphorus compound selected among phosphoric acid, phosphorous acid, hypophosphorous acid, pyrophorphoric acid, phosphoric triamide, monoammonium phosphate, trimethyl phosphate, dimethyl phosphate, diphenyl phosphate, triphenyl phosphate, diphenyl phosphite, triphenyl phosphite and dimethyl phenyl phosphonate.

The following describes a production method of the polyester resin according to an embodiment of the invention. The production method of the polyester resin according to the embodiment of the invention produces the polyester resin by the esterification reaction of the dicarboxylic acid component (D-1) consisting of the dicarboxylic acid and the diol component (E) or the transesterification reaction of the dicarboxylic acid component (D-2) consisting of the ester derivative of the dicarboxylic acid and the diol component (E) and the subsequent polycondensation reaction, wherein the catalyst solution for polyester production according to the embodiment of the invention described above is used as the reaction catalyst of the esterification reaction or the transesterification reaction and/or the polycondensation reaction. Concrete examples of the dicarboxylic acid components (D-1) and (D-2) and the diol component (E) herein have been given above as the respective components of the polyester resin.

When direct polymerization method is employed for the production method of the polyester resin according to the embodiment of the invention, the polyester resin is produced by performing the direct esterification reaction of the dicarboxylic acid and the diol to obtain an oligomer and subsequently performing the polycondensation reaction. When transesterification method is employed, on the other hand, the polyester resin is produced by performing the transesterification reaction of the ester derivative of the dicarboxylic acid and the diol to obtain an oligomer and subsequently performing the polycondensation reaction.

The conditions of the esterification reaction or the transesterification reaction used in the conventional batch production method or continuous production method of the polyester resin may be applied without change to the esterification reaction or the transesterification reaction of the embodiment.

According to an embodiment of the invention, the esterification reaction or the transesterification reaction is generally performed under pressure of not greater than 101 kPa. In terms of enabling efficient production of the polyester resin, the esterification reaction or the transesterification reaction is preferably performed under slightly reduced pressure of not greater than 95 kPa.

The reaction temperature of the esterification reaction or the transesterification reaction is preferably not lower than 140°C, is more preferably not lower than 150°C and is especially preferably not lower than 160°C. The reaction temperature of the esterification reaction or the transesterification reaction is preferably not higher than 290°C, is more preferably not higher than 280°C and is especially preferably not higher than 240°C.

The rate of reaction of the oligomer after the esterification reaction or after the transesterification reaction is preferably not lower than 97%.

According to an embodiment of the invention, the molar ratio ((E)/ (D-1)) of the diol component (E) to the dicarboxylic acid component (D-1) or the molar ratio ((E)/(D-2)) of the diol component (E) to the dicarboxylic acid component (D-2) consisting of the ester derivative of the dicarboxylic acid is preferably in the range of 1.1 to 6.0. In terms of reducing the amount of the by-product THF due to cyclization of 1,4-butanediol in the course of the esterification reaction or the transesterification reaction and enabling efficient production of the polyester resin, the molar ratio is more preferably in the range of 1.1 to 3.0 and is furthermore preferably in the range of 1.1 to 2.0. In terms of the effect of shortening the reaction time of the polycondensation reaction, the molar ratio is especially preferably in the range of 1.1 to 1.8.

With respect to the esterification reaction or the transesterification reaction according to the embodiment of the invention, in terms of enabling the reaction to proceed efficiently, the diol component (E) may be additionally supplied. The additional supply of the diol component (E) may be performed after completion of the esterification reaction or completion of the transesterification reaction and before the start of the polycondensation reaction. In terms of shortening the polymerization time, however, the additional supply of the diol component (E) is preferably performed in any phase from the start of the esterification reaction or the start of the transesterification reaction to the start of the polycondensation reaction. The additional supply of the diol component (E) may be performed a plurality of times. In terms of the operability, however, it is preferable to perform the additional supply of the diol component (E) once in any phase after the start of the esterification reaction or the start of the transesterification reaction to the start of the polycondensation reaction.

In the production method of the polyester resin according to the embodiment of the invention, the compound (F) having three or more functional groups may be added in any phase from the start of the esterification reaction or the start of the transesterification reaction to immediately before completion of the polycondensation reaction. Addition of the above compound (F) may be performed once or a plurality of times. In terms of producing the polyester resin having the high heat-resistant stability, it is preferable to add the above compound (F) once in any phase from prior to the esterification reaction or prior to the transesterification reaction to the start of the polycondensation reaction. More specifically, in terms of the operability, it is most preferable to add the above component (F) after mixing the dicarboxylic acid component (D-1) or the dicarboxylic acid component (D-2) consisting of the ester derivative of the dicarboxylic acid with the diol component (E) at the start of the esterification reaction or at the start of the transesterification reaction.

In the production method of the polyester resin according to the embodiment of the invention, the start of the esterification reaction or the start of the transesterification reaction is the term used in the sense that includes the reaction preparatory phase of mixing the reaction components, for example, the dicarboxylic acid component and the diol component; in other words, in the sense that includes the reaction start time prior to the esterification reaction or prior to the transesterification reaction.

With respect to the esterification reaction or the transesterification reaction, it is preferable to add a catalyst, in order to enable the reaction to proceed effectively. In terms of producing the polyester resin having few foreign substances, it is more preferable to add the catalyst solution for polyester production of the invention described above before the start of the esterification reaction or before the start of the transesterification reaction.

With respect to the esterification reaction or the transesterification reaction, it is preferable to add the catalyst solution for polyester production described above, such that the addition amount of the titanium compound (A) is preferably in the range of 3×10⁻⁵ mol to 9×10⁻⁴ mol and is more preferably in the range of 6×10⁻⁵ mol to 6×10⁻⁴ mol relative to 100 g of the resulting polyester resin. The addition amount of the titanium compound (A) in this range allows the amount of the titanium compound (A) included in the resulting polyester resin to be readily adjusted to a desired numerical range described later and enables further reduction in content of foreign substances in the polyester resin. The amount of the resulting polyester resin herein means the production amount of the polyester resin on the assumption that the yield is 100% relative to the material supply amounts. The same is also true in the description hereinafter.

Additionally, with respect to the esterification reaction or the transesterification reaction, when the catalyst solution for polyester production including the compound (C) having the nitrogen atom-containing aromatic heterocyclic structure is used, the addition amount of the compound (C) having the nitrogen atom-containing aromatic heterocyclic structure is preferably in the range of not less than 3.0×10⁻⁷ mol and less than 1.5×10⁻⁴ mol relative to 100 g of the resulting polyester resin. The content of the compound (C) that is less than 3.0×10⁻⁷ mol is likely to increase the amount of foreign substances included in the polyester resin. The content of the compound (C) is preferably not less than 7.5×10⁻⁶ mol and is more preferably not less than 1.5×10⁻⁵ mol. The content of the compound (C) that is not less than 1.5×10⁻⁴ mol is, on the other hand, likely to increase the amount of foreign substances included in the polyester resin and deteriorate the color tone of the polyester resin. The content of the compound (C) is more preferably not greater than 7.5×10⁻⁵ mol and is most preferably not greater than 4.5×10⁻⁵ mol.

The oligomer obtained by the esterification reaction or the transesterification reaction is subsequently subjected to the polycondensation reaction. The conditions of polycondensation used in the conventional batch production method or continuous production method of the polyester resin may be applied without change to the polycondensation reaction of the embodiment. According to a preferred embodiment, polycondensation is performed under the following conditions: at the reaction temperature of 230 to 260°C or preferably 240 to 255°C and under reduced pressure of not greater than 667 Pa or preferably not greater than 133 Pa.

With respect to the polycondensation reaction after the esterification reaction or after the transesterification reaction in the production method of the polyester resin according to the embodiment of the invention, it is preferable to add the catalyst solution for polyester production described above prior to the polycondensation reaction, in order to enable this polycondensation reaction to proceed effectively.

With respect to the polycondensation reaction, it is preferable to add the catalyst solution for polyester production described above, such that the addition amount of the titanium compound (A) is preferably in the range of 3×10⁻⁵ mol to 9×10⁻⁴ mol and is more preferably in the range of 6×10⁻⁵ mol to 6×10⁻⁴ mol relative to 100 g of the resulting polyester resin. The addition amount of the titanium compound (A) in this range allows the amount of the titanium compound (A) included in the resulting polyester resin to be readily adjusted to a desired numerical range described later and enables further reduction in content of foreign substances in the polyester resin.

Additionally, with respect to the polymerization reaction, when the catalyst solution for polyester production including the compound (C) having the nitrogen atom-containing aromatic heterocyclic structure is used, the addition amount of the compound (C) having the nitrogen atom-containing aromatic heterocyclic structure is preferably in the range of not less than 3.0×10⁻⁷ mol and less than 1.5×10⁻⁴ mol relative to 100 g of the resulting polyester resin. The content of the compound (C) that is less than 3.0×10⁻⁷ mol is likely to increase the amount of foreign substances included in the polyester resin. The content of the compound (C) is preferably not less than 7.5×10⁻⁶ mol and is more preferably not less than 1.5×10⁻⁵ mol. The content of the compound (C) that is not less than 1.5×10⁻⁴ mol is, on the other hand, likely to increase the amount of foreign substances included in the polyester resin and deteriorate the color tone of the polyester resin. The content of the compound (C) is more preferably not greater than 7.5×10⁻⁵ mol and is most preferably not greater than 4.5×10⁻⁵ mol.

With respect to the esterification reaction or the transesterification reaction and the polycondensation reaction in the production method of the polyester resin according to the embodiment of the invention, it is preferable to add a catalyst solution for polyester production to the reaction system prior to start of the esterification reaction or the transesterification reaction and start of the polycondensation reaction, in order to enable the esterification reaction or the transesterification reaction and the polycondensation reaction to proceed effectively. The catalyst solution may be added only one of prior to start of the esterification reaction or the transesterification reaction and prior to start of the polycondensation reaction. It is, however, preferable to add the catalyst solution both prior to start of the esterification reaction or the transesterification reaction and prior to start of the polycondensation reaction, in order to enable the reactions to proceed effectively. In terms of enabling further reduction in amount of foreign substances included in the resulting polyester resin, the catalyst solution for polyester production obtained by the production method described above is preferably used as this catalyst solution for polyester production.

In terms of shortening the reaction time of the esterification reaction or the transesterification reaction and the reaction time of the polycondensation reaction and enabling efficient production of the polyester resin, the content of the titanium compound (A) included in 100 g of the polyester resin produced according to the embodiment of the invention is preferably not less than 6.0×10⁻⁵ mol and is more preferably not less than 1.2×10⁻⁴ mol. Additionally, in order to reduce the amount of the by-product THF and produce the polyester resin efficiently, the content of the titanium compound (A) included in 100 g of the polyester resin produced according to the embodiment of the invention is furthermore preferably not less than 2.0×10⁻⁴ mol. In terms of enabling further reduction in amount of foreign substances included in the polyester resin, on the other hand, the content of the titanium compound (A) included in 100 g of the polyester resin produced according to the embodiment of the invention is preferably not greater than 1.8×10⁻³ mol and is more preferably not greater than 1.2×10⁻³ mol. The amount of the titanium compound (A) included in 100 g of the polyester resin herein may be obtained by, for example, element analysis, ¹H-NMR or ¹³C-NMR measurement and is the value measured by element analysis method according to the embodiment of the invention.

According to an embodiment of the invention, when the catalyst solution for polyester production including the compound (C) having the nitrogen atom-containing aromatic heterocyclic structure is used, the content of the compound (C) having the nitrogen atom-containing aromatic heterocyclic structure is preferably in the range of not less than 6.0×10⁻⁷ mol and less than 3.0×10⁻⁴ mol relative to 100 g of the resulting polyester resin. The content of the compound (C) that is less than 6.0×10⁻⁷ mol is likely to increase the amount of foreign substances included in the polyester resin. The content of the compound (C) is preferably not less than 1.5×10⁻⁵ mol and is more preferably not less than 3.0×10⁻⁵ mol. The content of the compound (C) that is not less than 3.0×10⁻⁴ mol is, on the other hand, likely to increase the amount of foreign substances included in the polyester resin and deteriorate the color tone of the polyester resin. The content of the compound (C) is more preferably not greater than 1.5×10⁻⁴ mol and is most preferably not greater than 9.0×10⁻⁵ mol. The amount of the compound (C) included in 100 g of the polyester resin herein may be obtained by, for example, element analysis, ¹H-NMR or ¹³C-NMR measurement and is the value measured by element analysis method according to the embodiment of the invention.

According to an embodiment of the invention, since there is no possibility of loss of the contents due to, for example, volatilization in the course of the esterification reaction or the transesterification reaction and in the course of the polycondensation reaction, the content of the titanium compound (A) and the content of the compound (C) included in the polyester resin are equal to their supply amounts. Accordingly, in the production method of the polyester resin described above, for example, the content of each compound can be adjusted to a desired range by controlling the addition amount of the compound.

The polyester resin according to the embodiment of the invention has few foreign substances and good color tone, in addition to the excellent mechanical properties, the excellent hydrolysis resistance, the excellent crystallization characteristics and the excellent heat resistance that the polyester resin generally has, and is thereby preferably used as the molding material for, e.g., electric components and auto components. The polyester resin according to the embodiment of the invention may be applied widely for films, sheets, fibers and blow bottles.

### Examples

The invention is described more in detail with reference to examples. The following describes the measurement methods and the evaluation methods employed.

### (1) Measurement of Particle Diameter

A "zeta potential and particle size measurement system ELS-Z" manufactured by Otsuka Electronics Co., Ltd was used for measurement. The procedure of measurement placed the catalyst solution for polyester production including the titanium compound (A), the organic solvent (B) and the compound (C) or the catalyst solution for polyester production including the titanium compound (A) and the organic solvent (B) in a rectangular cell for particle diameter measurement, entered the index of refraction of the used organic solvent (B), and measured the scattering intensity 70 times at the temperature of 25°C by the dynamic light scattering method. The procedure then determined the particle diameter by analyzing the scattering intensity obtained as described above by the cumulant analysis method. When any particles are present in the catalyst solution for polyester production, the value obtained herein is substantially equivalent to the mean value of the diameter of the particles. The value of 0 nm indicates the absence of particles. The dynamic light scattering measurement was performed after elapse of 30 minutes since preparation of the catalyst solution for polyester production including the titanium compound (A), the organic solvent (B) and the compound (C) or the catalyst solution for polyester production including the titanium compound (A) and the organic solvent (B).

### (2) Measurement of Water Content

A "trace moisture measurement device CA-100" manufactured by Mitsubishi Chemical Corporation, "AQUAMICRON (registered trademark) CXU" manufactured by Mitsubishi Chemical Corporation for catholyte and "AQUAMICRON AX" manufactured by Mitsubishi Chemical Corporation for anolyte were used for measurement. The procedure of measurement employed the Karl-Fischer coulometric titration method and measured the water content of the mixed solution of the organic solvent (B) and the compound (C) or the water content of the organic solvent (B), which was subjected to adjustment of the water content with heating and stirring at 150°C under nitrogen stream.

### (3) Measurement of pH

A pH meter "HM-30V" manufactured by DKK-TOA CORPORATION was used for measurement. The procedure of measurement calibrated the pH meter with standard solutions of phthalate (pH 4.01), neutral phosphate (pH 6.86) and borate (pH 9.18) and measured the pH of the organic solvent (B), which was subjected to the pH adjustment, at the temperature of 25°C.

### (4) Evaluation of Long Term Stability

The procedure of evaluation placed the prepared catalyst solution in a container, which was dried three hours in a dryer set at 50°C, sealed the container under nitrogen atmosphere, and kept the sealed container at room temperature for three months. The catalyst solution was visually observed every week in a four-week period since preparation of the catalyst solution and thereafter every month.

### (5) Measurement of Amount of By-product THF

The procedure of measurement sampled a distillate obtained in the course of the esterification reaction and measured the amount of the by-product THF included in the distillate by the internal standard method using a gas chromatography device "GC-17A" manufactured by SHIMADZU CORPORATION. The less amount of the by-product THF indicates the more efficient production.

### (6) Measurement of Molecular Weight

A refractive index detector WATERS 410 manufactured by Waters Corporation for the detector, high-performance liquid chromatography MODEL 510 for the pump, and serially connected Shodex GPC HFIP-806M and Shodex GPC HFIP-LG for the column were used for measurement. The procedure of measurement measured the weight-average molecular weight of the polyester resin in standard poly(methyl methacrylate) equivalent by gel permeation chromatography (GPC). The measurement conditions were the flow rate of 1.0 mL/minute, hexafluoroisopropanol used as the solvent and injection of 0.1 ml of the solution having the sample concentration of 1 mg/mL.

### (7) Measurement of Solution Haze

A solution having the polyester resin concentration of 5.4 g/ 40 mL was prepared by dissolving the polyester resin in a 6:4 (weight ratio) mixed solution of phenol and tetrachloroethane. The solution haze of the polyester resin was measured at the temperature of 25°C by using a turbidity meter "300A" manufactured by Nippon Denshoku Industries Co., Ltd. with an optical cell having the cell length of 10 mm. The smaller value of solution haze indicates the less foreign substances.

### (8) Measurement of Color Tone

The color measurement of a film produced in the thickness of 0.7 mm was performed by using a spectrophotometer "SE-2000" manufactured by Nippon Denshoku Industries Co., Ltd, and the b value was measured. The greater b value indicates the more yellowish, and the smaller b value indicates the more bluish. The smaller b value (the greater absolute value of the b value) indicates the more excellent color tone.

### (9) Measurement of Amounts of Titanium Compound (A) and Compound (C) Included in Polyester Resin

The procedure of measurement added 3 mL of sulfuric acid to 1.5 g of the polyester resin and then added 15 mL of nitric acid little by little. The procedure confirmed that the polyester resin was degraded and added 3 mL of a 1:5 (volume ratio) mixed solution of perchloric acid and nitric acid. When there was any insoluble substance, the procedure further added 3 mL of hydrofluoric acid to completely degrade the polyester resin. The procedure then heated and dissolved the degraded polyester resin and adjusted to a predetermined volume with diluted nitric acid. Element analysis was performed by using an ICP emission spectrophotometer "SPS4000" manufactured by Hitachi High-Tech Science Corporation. The procedure determined the amount of metal atom of the titanium compound (A) and the amount of nitrogen atom of the compound (C) included in 100 g of the polyester resin by element analysis and calculated the molar quantities of the titanium compound (A) and the compound (C).

### [Example 1]

The organic solvent (B) used was 1,4-butanediol (BDO) (manufactured by Tokyo Chemical Industry Co., Ltd.), and the compound (C) used was 2- hydroxymethyl pyridine (HMP) (manufactured by Tokyo Chemical Industry Co., Ltd). More specifically, the procedure added 0.4 g (3.3×10⁻³ mol) of the compound (C) to 100 g of the organic solvent (B) and prepared a mixed solution with heating and stirring at 150°C under nitrogen stream. The water content of the mixed solution measured by the method (2) described above was 0.05% by weight. The procedure subsequently cooled the mixed solution. After the solution temperature of the mixed solution decreased to 100°C, 11.2 g (3.3×10⁻² mol) of tetra-n-butoxytitanium (TBT) (manufactured by Tokyo Chemical Industry Co., Ltd.) was added as the titanium compound (A). This resulted in obtaining a catalyst solution for polyester production, wherein the molar ratio (C/A) of the content of the compound (C) to the content of the titanium compound (A) was 0.10 and the content of the titanium compound (A) was 10.0% by weight in the catalyst solution. The particle diameter in this catalyst solution for polyester production measured by the method (1) described above was 20 nm.

The molar ratio ((E)/(D-1)) of the diol component (E) to the dicarboxylic acid component (D-1) in the esterification reaction was 1.7. The dicarboxylic acid component (D-1) used was 250 g of terephthalic acid, and the diol component (E) used was 230 g of BDO. As the esterification reaction catalyst, 0.8 mL of the above catalyst solution for polyester production was used, such that the addition amount of TBT was 7.5×10⁻⁵ mol relative to 100 g of the resulting polyester resin (0.025 parts by weight relative to 100 parts by weight of the polyester resin). These raw materials and the esterification reaction catalyst were placed in a reactor with a rectifying column, and the esterification reaction was started at the temperature of 160°C and under reduced pressure of 90 kPa. The temperature was then gradually raised, and the esterification reaction was performed eventually under the condition of the temperature of 225°C. Completion of the esterification reaction was confirmed, for example, based on the state of the distillate, so that the reaction time of the esterification reaction was 210 minutes. As the polycondensation reaction catalyst, 0.25 mL of the above catalyst solution for polyester production was used and added to the obtained reactant, such that the addition amount of TBT was 7.5×10⁻⁵ mol relative to 100 g of the resulting polyester resin (0.025 parts by weight relative to 100 parts by weight of the polyester resin). The polycondensation reaction was performed under the conditions of the temperature of 245°C and the pressure of 100 Pa. Completion of the polycondensation reaction was confirmed, for example, based on the viscosity of the reactant, so that the reaction time of the polycondensation reaction to obtain a polyester resin was 165 minutes. The content of the titanium compound (A) relative to 100 g of the resulting polyester resin measured by the element analysis method was 1.5×10⁻⁴ mol, and the content of the compound (C) relative to 100 g of the resulting polyester resin was 1.5×10⁻⁵ mol.

### [Example 2]

Example 2 used the catalyst solution for polyester production used in Example 1. The esterification reaction was performed in the same manner as Example 1 with the following exceptions: the volume of the above catalyst solution for polyester production used as the esterification reaction catalyst was changed to 1.6 mL, such that the addition amount of TBT was 1.5×10⁻⁴ mol relative to 100 g of the resulting polyester resin (0.05 parts by weight relative to 100 parts by weight of the polyester resin); and the reaction time of the esterification reaction was 180 minutes. The polycondensation reaction was also performed in the same manner as Example 1 with the following exceptions: the volume of the above catalyst solution for polyester production used as the polycondensation reaction catalyst was changed to 0.5 mL, such that the addition amount of TBT was 1.5×10⁻⁴ mol relative to 100 g of the resulting polyester resin (0.05 parts by weight relative to 100 parts by weight of the polyester resin); and the reaction time of the polycondensation reaction was 150 minutes. The content of the titanium compound (A) relative to 100 g of the resulting polyester resin measured by the element analysis method was 3.0×10⁻⁴ mol, and the content of the compound (C) relative to 100 g of the resulting polyester resin was 3.0×10⁻⁵ mol.

### [Example 3]

A catalyst solution for polyester production was prepared in the same manner as Example 1 with the following exceptions: the addition amount of the compound (C) in the catalyst solution was changed to 0.04 g (3.3×10⁻⁴ mol); and the molar ratio (C/A) of the content of the compound (C) to the content of the titanium compound (A) was changed to 0.01, with respect to preparation of the catalyst solution for polyester production in Example 1. This resulted in obtaining the catalyst solution for polyester production having the particle diameter of 25 nm measured by the method (1) described above. The esterification reaction and the polycondensation reaction were performed to obtain a polyester resin in the same manner as Example 2 with the following exception: the catalyst solution for polyester production described above was used in place of the catalyst solution for polyester production used in Example 2. The content of the compound (C) relative to 100 g of the resulting polyester resin measured by the element analysis method was 3.0×10⁻⁶ mol.

### [Example 4]

A catalyst solution for polyester production was prepared in the same manner as Example 1 with the following exceptions: the addition amount of the compound (C) in the catalyst solution was changed to 1.8 g (1.7×10⁻² mol); the addition amount of the titanium compound (A) was changed to 11.3 g (3.3×10⁻² mol); and the molar ratio (C/A) of the content of the compound (C) to the content of the titanium compound (A) was changed to 0.50, with respect to preparation of the catalyst solution for polyester production in Example 1. This resulted in obtaining the catalyst solution for polyester production having the particle diameter of 15 nm measured by the method (1) described above. The esterification reaction and the polycondensation reaction were performed to obtain a polyester resin in the same manner as Example 2 with the following exception: the catalyst solution for polyester production described above was used in place of the catalyst solution for polyester production used in Example 2. The content of the compound (C) relative to 100 g of the resulting polyester resin measured by the element analysis method was 1.5×10⁻⁴ mol.

### [Example 5]

A catalyst solution for polyester production was prepared in the same manner as Example 1 with the following exceptions: the addition amount of the compound (C) in the catalyst solution was changed to 2.7 g (2.5×10⁻² mol); the addition amount of the titanium compound (A) was changed to 11.4 g (3.3×10⁻² mol); and the molar ratio (C/A) of the content of the compound (C) to the content of the titanium compound (A) was changed to 0.75, with respect to preparation of the catalyst solution for polyester production in Example 1. This resulted in obtaining the catalyst solution for polyester production having the particle diameter of 15 nm measured by the method (1) described above. The esterification reaction and the polycondensation reaction were performed to obtain a polyester resin in the same manner as Example 2 with the following exception: the catalyst solution for polyester production described above was used in place of the catalyst solution for polyester production used in Example 2. The content of the compound (C) relative to 100 g of the resulting polyester resin measured by the element analysis method was 2.3×10⁻⁴ mol.

### [Example 6]

A catalyst solution for polyester production was prepared in the same manner as Example 1 with the following exceptions: the addition amount of the compound (C) in the catalyst solution was changed to 0.9 g (8.2×10⁻³ mol); and the molar ratio (C/A) of the content of the compound (C) to the content of the titanium compound (A) was changed to 0.25, with respect to preparation of the catalyst solution for polyester production in Example 1. This resulted in obtaining the catalyst solution for polyester production having the particle diameter of 10 nm measured by the method (1) described above. The esterification reaction and the polycondensation reaction were performed to obtain a polyester resin in the same manner as Example 2 with the following exception: the catalyst solution for polyester production described above was used in place of the catalyst solution for polyester production used in Example 2. The content of the compound (C) relative to 100 g of the resulting polyester resin measured by the element analysis method was 7.5×10⁻⁵ mol.

### [Example 7]

A catalyst solution for polyester production was prepared in the same manner as Example 6 with the following exceptions: the addition amount of the compound (C) in the catalyst solution was changed to 2.0 g (1.9×10⁻² mol); the addition amount of the titanium compound (A) was changed to 25.5 g (7.5×10⁻² mol); and the content of the titanium compound (A) was changed to 20.0% by weight in the catalyst solution, with respect to preparation of the catalyst solution for polyester production in Example 6. This resulted in obtaining the catalyst solution for polyester production having the particle diameter of 10 nm measured by the method (1) described above. The esterification reaction and the polycondensation reaction were performed to obtain a polyester resin in the same manner as Example 6 with the following exceptions: the catalyst solution for polyester production described above was used in place of the catalyst solution for polyester production used in Example 6; the volume of the catalyst solution for polyester production in the esterification reaction was changed to 0.8 mL; and the volume of the catalyst solution for polyester production in the polycondensation reaction was changed to 0.25 mL.

### [Example 8]

A catalyst solution for polyester production was prepared in the same manner as Example 7 with the following exception: the titanium compound (A) was added after measurement of the water content of the mixed solution of the organic solvent (B) and the compound (C) by the method (2) described above with heating and stirring at 150°C under nitrogen stream and adjustment of the water content to 0.03% by weight, with respect to preparation of the catalyst solution for polyester production in Example 7. This resulted in obtaining the catalyst solution for polyester production having the particle diameter of 10 nm measured by the method (1) described above. The esterification reaction and the polycondensation reaction were performed to obtain a polyester resin in the same manner as Example 7 with the following exception: the catalyst solution for polyester production described above was used in place of the catalyst solution for polyester production used in Example 7.

### [Example 9]

A catalyst solution for polyester production was prepared in the same manner as Example 8 with the following exception: the titanium compound (A) was added after the mixed solution of the organic solvent (B) and the compound (C) was cooled down and the temperature of the mixed solution was adjusted to 80°C after adjustment of the water content, with respect to preparation of the catalyst solution for polyester production in Example 8. This resulted in obtaining the catalyst solution for polyester production having the particle diameter of 10 nm measured by the method (1) described above. The esterification reaction and the polycondensation reaction were performed to obtain a polyester resin in the same manner as Example 8 with the following exception: the catalyst solution for polyester production described above was used in place of the catalyst solution for polyester production used in Example 8.

### [Example 10]

A catalyst solution for polyester production was prepared in the same manner as Example 8 with the following exception: the titanium compound (A) was added after the mixed solution of the organic solvent (B) and the compound (C) was cooled down and the temperature of the mixed solution was adjusted to 60°C after adjustment of the water content, with respect to preparation of the catalyst solution for polyester production in Example 8. This resulted in obtaining the catalyst solution for polyester production having the particle diameter of 10 nm measured by the method (1) described above. The esterification reaction and the polycondensation reaction were performed to obtain a polyester resin in the same manner as Example 8 with the following exception: the catalyst solution for polyester production described above was used in place of the catalyst solution for polyester production used in Example 8.

### [Example 11]

The esterification reaction and the polycondensation reaction were performed to obtain a polyester resin in the same manner as Example 10 with the following exceptions: the molar ratio ((E)/(D-1)) of the diol component (E) to the dicarboxylic acid component (D-1) in the esterification reaction was changed to 2.0; the amount of BDO was changed to 270 g; the reaction time of the esterification reaction was 190 minutes; and the reaction time of the polycondensation reaction was 160 minutes.

### [Example 12]

A catalyst solution for polyester production was prepared in the same manner as Example 6 with the following exceptions: the water content of the mixed solution of the organic solvent (B) and the compound (C) was measured by the method (2) described above with heating and stirring at 150°C under nitrogen stream and was adjusted to 0.03% by weight; and the titanium compound (A) was added after the mixed solution was cooled down and the temperature of the mixed solution was adjusted to 60°C, with respect to preparation of the catalyst solution for polyester production in Example 6. This resulted in obtaining the catalyst solution for polyester production having the particle diameter of 10 nm measured by the method (1) described above. The esterification reaction and the polycondensation reaction were performed to obtain a polyester resin in the same manner as Example 6 with the following exception: the catalyst solution for polyester production described above was used in place of the catalyst solution for polyester production used in Example 6.

### [Example 13]

The esterification reaction and the polycondensation reaction were performed to obtain a polyester resin in the same manner as Example 12 with the following exceptions: the volume of the catalyst solution for polyester production in the esterification reaction was changed to 1.3 mL; and the volume of the catalyst solution for polyester production in the polycondensation reaction was changed to 0.4 mL, with respect to the esterification reaction and the polycondensation reaction of Example 12. The content of the titanium compound (A) relative to 100 g of the resulting polyester resin measured by the element analysis method was 2.4×10⁻⁴ mol, and the content of the compound (C) relative to 100 g of the resulting polyester resin was 6.0×10⁻⁵ mol.

### [Example 14]

A catalyst solution for polyester production was prepared in the same manner as Example 12 with the following exceptions: the addition amount of the titanium compound (A) in the catalyst solution was changed to 3.0 g (8.9×10⁻³ mol); the addition amount of the organic solvent (B) was changed to 300 g; the addition amount of the compound (C) was changed to 0.24 g (2.2×10⁻³ mol); and the content of the titanium compound (A) was changed to 1.0% by weight in the catalyst solution, with respect to preparation of the catalyst solution for polyester production in Example 12. This resulted in obtaining the catalyst solution for polyester production having the particle diameter of 5 nm measured by the method (1) described above. The esterification reaction and the polycondensation reaction were performed to obtain a polyester resin in the same manner as Example 12 with the following exceptions: the amount of BDO used as the diol component (E) in the esterification reaction was changed to 225 g; the catalyst solution for polyester production described above was used in place of the catalyst solution for polyester production used in Example 12; the volume of the catalyst solution for polyester production in the esterification reaction was changed to 16 mL; and the volume of the catalyst solution for polyester production in the polycondensation reaction was changed to 4.9 mL.

### [Example 15]

A catalyst solution for polyester production was prepared in the same manner as Example 14 with the following exceptions: the addition amount of the titanium compound (A) in the catalyst solution was changed to 0.6 g (1.8×10⁻³ mol); the addition amount of the compound (C) was changed to 0.05 g (0.4×10⁻³ mol); and the content of the titanium compound (A) was changed to 0.2% by weight in the catalyst solution, with respect to preparation of the catalyst solution for polyester production in Example 14. This resulted in obtaining the catalyst solution for polyester production having the particle diameter of 0 nm measured by the method (1) described above, i.e., having no detection of the particle diameter. The esterification reaction and the polycondensation reaction were performed to obtain a polyester resin in the same manner as Example 14 with the following exceptions: the amount of BDO used as the diol component (E) in the esterification reaction was changed to 160 g; the catalyst solution for polyester production described above was used in place of the catalyst solution for polyester production used in Example 14; the volume of the catalyst solution for polyester production in the esterification reaction was changed to 81 mL; and the volume of the catalyst solution for polyester production in the polycondensation reaction was changed to 25 mL.

### [Reference Example 16]

A catalyst solution for polyester production was prepared in the same manner as Example 6 with the following exceptions: the compound (C) in the catalyst solution was changed to pyridine (Py) (manufactured by Tokyo Chemical Industry Co., Ltd.); and the addition amount of the compound (C) was changed to 0.7 g (8.2×10⁻³ mol), with respect to preparation of the catalyst solution for polyester production in Example 6. This resulted in obtaining the catalyst solution for polyester production having the particle diameter of 20 nm measured by the method (1) described above. The esterification reaction and the polycondensation reaction were performed to obtain a polyester resin in the same manner as Example 6 with the following exceptions: the catalyst solution for polyester production described above was used in place of the catalyst solution for polyester production used in Example 6; and the reaction time of the polycondensation reaction was 155 minutes.

### [Reference Example 17]

A catalyst solution for polyester production was prepared in the same manner as Reference Example 16 with the following exceptions: the compound (C) in the catalyst solution was changed to pyrrole (Tp) (manufactured by Tokyo Chemical Industry Co., Ltd.); and the addition amount of the compound (C) was changed to 0.6 g (8.2×10⁻³ mol), with respect to preparation of the catalyst solution for polyester production in Reference Example 16. This resulted in obtaining the catalyst solution for polyester production having the particle diameter of 25 nm measured by the method (1) described above. The esterification reaction and the polycondensation reaction were performed to obtain a polyester resin in the same manner as Reference Example 16 with the following exception: the catalyst solution for polyester production described above was used in place of the catalyst solution for polyester production used in Reference Example 16.

### [Example 18]

A catalyst solution for polyester production was prepared in the same manner as Reference Example 16 with the following exceptions: the compound (C) in the catalyst solution was changed to 1-hydroxypropyl pyrrole (HPT) (manufactured by Tokyo Chemical Industry Co., Ltd.); and the addition amount of the compound (C) was changed to 1.0 g (8.2×10⁻³ mol), with respect to preparation of the catalyst solution for polyester production in Example 16. This resulted in obtaining the catalyst solution for polyester production having the particle diameter of 20 nm measured by the method (1) described above. The esterification reaction and the polycondensation reaction were performed to obtain a polyester resin in the same manner as Reference Example 16 with the following exception: the catalyst solution for polyester production described above was used in place of the catalyst solution for polyester production used in Reference Example 16.

### [Example 19]

A catalyst solution for polyester production was prepared in the same manner as Example 1 with the following exceptions: the addition amount of the compound (C) in the catalyst solution was changed to 3.7 g (3.4×10⁻² mol); and the molar ratio (C/A) of the content of the compound (C) to the content of the titanium compound (A) was changed to 1.0, with respect to preparation of the catalyst solution for polyester production in Example 1. This resulted in obtaining the catalyst solution for polyester production having the particle diameter of 15 nm measured by the method (1) described above. The esterification reaction and the polycondensation reaction were performed to obtain a polyester resin in the same manner as Example 2 with the following exception: the catalyst solution for polyester production described above was used in place of the catalyst solution for polyester production used in Example 2. The content of the compound (C) relative to 100 g of the resulting polyester resin measured by the element analysis method was 3.0×10⁻⁴ mol.

### [Example 20]

A catalyst solution for polyester production was prepared in the same manner as Example 19 with the following exception: the titanium compound (A) was added without adjustment of the water content of the mixed solution of the organic solvent (B) and the compound (C), with respect to preparation of the catalyst solution for polyester production in Example 19. This resulted in obtaining the catalyst solution for polyester production having the particle diameter of 15 nm measured by the method (1) described above. The esterification reaction and the polycondensation reaction were performed to obtain a polyester resin in the same manner as Example 19 with the following exception: the catalyst solution for polyester production described above was used in place of the catalyst solution for polyester production used in Example 19. The water content of the mixed solution of the organic solvent (B) and the compound (C), which was not subjected to adjustment of the water content, was measured by the method (3) described above and was 0.10% by weight.

### [Example 21]

A catalyst solution for polyester production was prepared in the same manner as Example 20 with the following exceptions: the titanium compound (A) in the catalyst solution was changed to tetra-n-propoxytitanium (TPT) (manufactured by Tokyo Chemical Industry Co., Ltd.); the addition amount of the titanium compound (A) was changed to 11 g (4.1×10⁻² mol); and the addition amount of the compound (C) was changed to 4.4 g (4.1×10⁻² mol), with respect to preparation of the catalyst solution for polyester production in Example 20. This resulted in obtaining the catalyst solution for polyester production having the particle diameter of 15 nm measured by the method (1) described above. The esterification reaction and the polycondensation reaction were performed to obtain a polyester resin in the same manner as Example 20 with the following exceptions: the catalyst solution for polyester production described above was used in place of the catalyst solution for polyester production used in Example 20; the reaction time of the esterification reaction was 185 minutes; and the reaction time of the polycondensation reaction was 165 minutes.

### [Example 22]

A catalyst solution for polyester production was prepared in the same manner as Example 20 with the following exceptions: the addition amount of the compound (C) in the catalyst solution was changed to 4.5 g (4.1×10⁻² mol); the molar ratio (C/A) of the content of the compound (C) to the content of the titanium compound (A) was changed to 1.2; and the temperature of the mixed solution of the organic solvent (B) and the compound (C) prior to addition of the titanium compound (A) was changed to 150°C, with respect to preparation of the catalyst solution for polyester production in Example 20. This resulted in obtaining the catalyst solution for polyester production having the particle diameter of 15 nm measured by the method (1) described above. The esterification reaction and the polycondensation reaction were performed to obtain a polyester resin in the same manner as Example 20 with the following exception: the catalyst solution for polyester production described above was used in place of the catalyst solution for polyester production used in Example 20. The content of the compound (C) relative to 100 g of the resulting polyester resin measured by the element analysis method was 3.6×10⁻⁴ mol.

### [Example 23]

A catalyst solution for polyester production was prepared in the same manner as Example 20 with the following exceptions: the addition amount of the titanium compound (A) in the catalyst solution was changed to 13 g (3.8×10⁻² mol); the addition amount of the compound (C) was changed to 16 g (1.5×10⁻¹ mol); the molar ratio (C/A) of the content of the compound (C) to the content of the titanium compound (A) was changed to 4.0; pure water was added to the mixed solution of the organic solvent (B) and the compound (C) with respect to the catalyst solution for polyester production used in Example 20 and the water content of the mixed solution measured by the method (2) described above was adjusted to 4.0% by weight; and the temperature of the mixed solution prior to addition of the titanium compound (A) was adjusted to 180°C, with respect to preparation of the catalyst solution for polyester production in Example 20. This resulted in obtaining the catalyst solution for polyester production having the particle diameter of 80 nm measured by the method (1) described above. The esterification reaction and the polycondensation reaction were performed to obtain a polyester resin in the same manner as Example 20 with the following exceptions: the catalyst solution for polyester production described above was used in place of the catalyst solution for polyester production used in Example 20; and the reaction time of the esterification reaction was 190 minutes. The content of the compound (C) relative to 100 g of the resulting polyester resin measured by the element analysis method was 12.0×10⁻⁴ mol.

### [Example 24]

A catalyst solution for polyester production was prepared in the same manner as Example 23 with the following exception: the organic solvent (B) in the catalyst solution for polyester production was changed to ethylene glycol (EG) (manufactured by Tokyo Chemical Industry Co., Ltd.), with respect to preparation of the catalyst solution for polyester production in Example 23. This resulted in obtaining the catalyst solution for polyester production having the particle diameter of 70 nm measured by the method (1) described above. The esterification reaction and the polycondensation reaction were performed to obtain a polyester resin in the same manner as Example 23 with the following exceptions: the catalyst solution for polyester production described above was used in place of the catalyst solution for polyester production used in Example 23; the reaction time of the esterification reaction was 200 minutes; and the reaction time of the polycondensation reaction was 160 minutes.

### [Reference Example 25]

A catalyst solution for polyester production was prepared in the same manner as Example 20 with the following exceptions: the compound (C) in the catalyst solution was changed to thiophene (Tip) (manufactured by Tokyo Chemical Industry Co., Ltd.); and the addition amount of the compound (C) was changed to 0.7 g (8.2×10⁻³ mol), with respect to preparation of the catalyst solution for polyester production in Example 20. This resulted in obtaining the catalyst solution for polyester production having the particle diameter of 30 nm measured by the method (1) described above. The esterification reaction and the polycondensation reaction were performed to obtain a polyester resin in the same manner as Example 20 with the following exceptions: the catalyst solution for polyester production described above was used in place of the catalyst solution for polyester production used in Example 20; the reaction time of the esterification reaction was 190 minutes; and the reaction time of the polycondensation reaction was 155 minutes.

### [Comparative Example 1]

A catalyst solution for polyester production was prepared in the same manner as Example 2 with the following exception: the compound (C) was not added, with respect to preparation of the catalyst solution for polyester production in Example 2. This resulted in obtaining the catalyst solution for polyester production having the particle diameter of 250 nm measured by the method (1) described above. The esterification reaction and the polycondensation reaction were performed to obtain a polyester resin in the same manner as Example 2 with the following exception: the catalyst solution for polyester production described above was used in place of the catalyst solution for polyester production used in Example 2.

### [Comparative Example 2]

A catalyst solution for polyester production was prepared in the same manner as Example 2 with the following exceptions: the compound (C) was not added; and adjustment of the water content was not performed, with respect to preparation of the catalyst solution for polyester production in Example 2. This resulted in obtaining the catalyst solution for polyester production having the particle diameter of 220 nm measured by the method (1) described above. The esterification reaction and the polycondensation reaction were performed to obtain a polyester resin in the same manner as Example 2 with the following exception: the catalyst solution for polyester production described above was used in place of the catalyst solution for polyester production used in Example 2. The water content of the organic solvent, which was not subjected to adjustment of the water content, was herein measured by the method (2) described above and was 0.10% by weight.

### [Comparative Example 3]

A catalyst solution for polyester production was prepared in the same manner as Comparative Example 2 with the following exception: pure water was added to the mixed solution of the organic solvent (B) and the water content of the mixed solution was adjusted to 2.0% by weight, with respect to preparation of the catalyst solution for polyester production in Comparative Example 2. This resulted in obtaining the catalyst solution for polyester production having the particle diameter of 800 nm measured by the method (1) described above. The esterification reaction and the polycondensation reaction were performed to obtain a polyester resin in the same manner as Comparative Example 2 with the following exceptions: the catalyst solution for polyester production described above was used in place of the catalyst solution for polyester production used in Comparative Example 2; and the reaction time of the polycondensation reaction was 160 minutes.

The results of the respective Examines and Comparative Examples are collectively shown in Tables 1 and 2.

**[Table 1]**

| | Titanium Compound (A) | | | Organic Solvent (B) | Compound (C) | | Mixed Solution of Titanium Compound (A), Organic Solvent (B) Compound (C) | Ratio of Content of Compound (C) to Content of Titanium Compound (A) | Mixed Solution of Organic Solvent (B) and Compound (C) | | Long Term Stability |
|---|---|---|---|---|---|---|---|---|---|---|---|
| | Type | Content in Polymer | Concentration in Catalyst Solution | Type | Type | Content in Polymer | Particle Diameter | | Water Content | Temperature Adjusted | |
| | | (mol/100 g of polymer) | (% by weight) | | | (mol/100 g of polymer) | (nm) | (mol(C)/mol(A)) | (% by weight) | (°C) | |
| EX 1 | TBT | 1.5× 10⁻⁴ | 100 | BDO | HMP | 1. 5×10⁻⁵ | 20 | 0.10 | 0.05 | 100 | No change in 3 months (Colorless and transparent) |
| EX 2 | TBT | 3.0×10⁻⁴ | 10.0 | BDO | HMP | 3.0×10⁻⁵ | 20 | 0.10 | 0.05 | 100 | No change in 3 months (Colorless and transparent) |
| EX 3 | TBT | 3.0×10⁻⁴ | 10.0 | BDO | HMP | 3.0×10⁻⁶ | 25 | 0.01 | 0. 05 | 100 | No change in 3 months (Colorless and transparent) |
| EX 4 | TBT | 3.0×10⁻⁴ | 10.0 | BDO | HMP | 1. 5×10⁻⁴ | 15 | 0.50 | 0.05 | 100 | No change in 3 months (Colorless and transparent) |
| EX 5 | TBT | 3.0×10⁻⁴ | 10.0 | BDO | HMP | 2.3×10⁻⁴ | 15 | 0.75 | 0.05 | 100 | No change in 3 months (Colorless and transparent) |
| EX 6 | TBT | 3.0×10⁻⁴ | 10.0 | BDO | HMP | 7.5×10⁻⁵ | 10 | 0. 25 | 0.05 | 100 | No change in 3 months (Colorless and transparent) |
| EX 7 | TBT | 3.0×10⁻⁴ | 20.0 | BDO | HMP | 7.5×10⁻⁵ | 10 | 0.25 | 0.05 | 100 | No change in 3 months (Colorless and transparent) |
| EX 8 | TBT | 3.0×10⁻⁴ | 20.0 | BDO | HMP | 7.5×10⁻⁵ | 10 | 0.25 | 0.03 | 100 | No change in 3 months (Colorless and transparent) |
| EX 9 | TBT | 3.0×10⁻⁴ | 20.0 | BDO | HMP | 7.5×10⁻⁵ | 10 | 0.25 | 0.03 | 80 | No change in 3 months (Colorless and transparent) |
| EX 10 | TBT | 3.0×10⁻⁴ | 20.0 | BDO | HMP | 7.5×10⁻⁵ | 10 | 0.25 | 0.03 | 60 | No change in 3 months (Colorless and transparent) |
| EX 11 | TBT | 3.0×10⁻⁴ | 20.0 | BDO | HMP | 7.5×10⁻⁵ | 10 | 0.25 | 0. 03 | 60 | No change in 3 months (Colorless and transparent) |
| EX 12 | TBT | 3.0×10⁻⁴ | 10.0 | BDO | HMP | 7.5×10⁻⁵ | 10 | 0.25 | 0.03 | 60 | No change in 3 months (Colorless and transparent) |
| EX 13 | TBT | 2.4×10⁻⁴ | 10.0 | BDO | HMP | 6.0×10⁻⁵ | 10 | 0.25 | 0. 03 | 60 | No change in 3 months (Colorless and transparent) |
| EX 14 | TBT | 3.0×10⁻⁴ | 1.0 | BDO | HMP | 7.5×10⁻⁵ | 5 | 0.25 | 0.03 | 60 | No change in 3 months (Colorless and transparent) |
| EX 15 | TBT | 3.0×10⁻⁴ | 0.2 | BDO | HMP | 7.5×10⁻⁵ | 0 | 0.25 | 0. 03 | 60 | No change in 3 months (Colorless and transparent) |
| EX 16* | TBT | 3.0×10⁻⁴ | 10.0 | BDO | Py | 7.5×10⁻⁵ | 20 | 0.25 | 0.05 | 100 | No change in 3 months (Colorless and transparent) |
| EX17* | TBT | 3.0×10⁻⁴ | 10.0 | BDO | Tp | 7.5×10⁻⁵ | 25 | 0. 25 | 0.05 | 100 | No change in 3 months (Colorless and transparent) |
| EX 18 | TBT | 3.0×10⁻⁴ | 10.0 | BDO | HPT | 7.5×10⁻⁵ | 20 | 0.25 | 0.05 | 100 | No change in 3 months (Colorless and transparent) |
| EX 19 | TBT | 3.0×10⁻⁴ | 10.0 | BDO | HMP | 3.0×10⁻⁴ | 15 | 1.0 | 0. 05 | 100 | No change in 3 months (Colorless and transparent) |
| EX 20 | TBT | 3.0×10⁻⁴ | 10.0 | BDO | HMP | 3.0×10⁻⁴ | 15 | 1.0 | 0.10 | 100 | No change in 3 months (Colorless and transparent) |
| EX 21 | TPT | 3.0×10⁻⁴ | 10.0 | BDO | HMP | 3.0×10⁻⁴ | 15 | 1.0 | 0.10 | 100 | No change in 3 months (Colorless and transparent) |
| EX 22 | TBT | 3. 0×10⁻⁴ | 10.0 | BDO | HMP | 3.6×10⁻⁴ | 15 | 1. 2 | 0.10 | 150 | No change in 3 months (Colorless and transparent) |
| EX 23 | TBT | 30×10⁻⁴ | 10.0 | BDO | HMP | 12.0×10⁻⁴ | 80 | 4.0 | 4.0 | 180 | No change in 3 months (Colorless and transparent) |
| EX 24 | TBT | 3.0×10⁻⁴ | 10.0 | EG | HMP | 12.0×10⁻⁴ | 70 | 4.0 | 4.0 | 180 | No change in 3 months (Colorless and transparent) |
| EX 25* | TBT | 3.0×10⁻⁴ | 10.0 | BDO | Tip | 3.0×10⁻⁴ | 30 | 1.0 | 0.10 | 100 | No change in 3 months (Colorless and transparent) |
| COMP EX 1 | TBT | 3.0×10⁻⁴ | 10.0 | BDO | - | 0 | 250 | 0 | 0.05 | 100 | Clouded and precipitated after 3 weeks |
| COMP EX 2 | TBT | 3.0×10⁻⁴ | 10.0 | BDO | - | 0 | 220 | 0 | 0.10 | 100 | Clouded and precipitated after 1 month |
| COMP EX 3 | TBT | 3.0×10⁻⁴ | 10.0 | BDO | - | 0 | 800 | 0 | 2. 0 | 100 | No change in 3 months (Colorless and transparent) |
| | 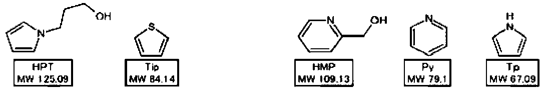 | | | | | | | | | | |

| | | | | | | | | | | | |
|---|---|---|---|---|---|---|---|---|---|---|---|
| * Reference examples | | | | | | | | | | | |

**[Table 2]**

| | Molar Ratio | Reaction Time | | Esterification Characteristic | Polymer Characteristics | | |
|---|---|---|---|---|---|---|---|
| | | Esterification Reaction | Polycondensation Reaction | Amount of By-product THF | Molecular Weight Mw | Solution Haze | Color Tone b Value |
| | (E)/(D-1) | (minutes) | (minutes) | (g/kgPBT) | (10 thousands) | (%) | |
| EX 1 | 1.7 | 210 | 165 | 95 | 1. 9 | 0.09 | -5.5 |
| EX 2 | 1. 7 | 180 | 150 | 85 | 1.9 | 0.09 | -5.5 |
| EX 3 | 1.7 | 180 | 150 | 85 | 1.9 | 0.16 | -6.0 |
| EX 4 | 1. 7 | 180 | 150 | 70 | 1.9 | 0.12 | -3.5 |
| EX 5 | 1.7 | 180 | 150 | 70 | 1.9 | 0.15 | -3.0 |
| EX 6 | 1. 7 | 180 | 150 | 80 | 1.9 | 0.08 | -4.0 |
| EX 7 | 1.7 | 180 | 150 | 80 | 1.9 | 0.08 | -4.0 |
| EX 8 | 1.7 | 180 | 150 | 80 | 1.9 | 0.06 | -5.0 |
| EX 9 | 1.7 | 180 | 150 | 80 | 1.9 | 0.04 | -5.5 |
| EX 10 | 1. 7 | 180 | 150 | 80 | 1.9 | 0.03 | -5.5 |
| EX 11 | 2.0 | 190 | 160 | 90 | 1.9 | 0.03 | -5.5 |
| EX 12 | 1. 7 | 180 | 150 | 80 | 1.9 | 0.03 | -5.5 |
| EX 13 | 1.7 | 180 | 150 | 85 | 1.9 | 0.03 | -5.5 |
| EX 14 | 1.7 | 180 | 150 | 80 | 1.8 | 0.02 | -5.5 |
| EX 15 | 1.7 | 180 | 150 | 80 | 1.8 | 0.01 | -5.5 |
| EX 16* | 1.7 | 180 | 155 | 80 | 1.8 | 0.13 | -3.5 |
| EX 17* | 1.7 | 180 | 155 | 80 | 1.8 | 0.15 | -3.0 |
| EX 18 | 1.7 | 180 | 155 | 80 | 1.8 | 0.11 | -3.5 |
| EX 19 | 1.7 | 180 | 150 | 65 | 1.9 | 0.17 | -2.5 |
| EX 20 | 1.7 | 180 | 150 | 65 | 1.9 | 0.19 | -2.5 |
| EX 21 | 1.7 | 185 | 165 | 75 | 1.9 | 1.0 | -2.5 |
| EX 22 | 1. 7 | 180 | 150 | 65 | 1.8 | 0.2 | -2.0 |
| EX 23 | 1.7 | 190 | 150 | 65 | 1.7 | 4.0 | -1.5 |
| EX 24 | 1.7 | 200 | 160 | 75 | 1.8 | 5.0 | -1.0 |
| EX 25 * | 1.7 | 190 | 155 | 90 | 1.8 | 9.0 | -1.5 |
| COMP EX 1 | 1.7 | 180 | 150 | 90 | 1.8 | 7.5 | -6.5 |
| COMP EX 2 | 1.7 | 180 | 150 | 90 | 1.8 | 10.0 | -6.5 |
| COMP EX 3 | 1.7 | 180 | 160 | 70 | 1.8 | 20.0 | -6.5 |

| | | | | | | | |
|---|---|---|---|---|---|---|---|
| * Reference examples | | | | | | | |

The above results of Examples and Comparative Examples show that when the catalyst solution for polyester production has the particle diameter of not greater than 200 nm measured by the dynamic light scattering method using the "zeta potential and particle size measurement system ELS-Z" manufactured by Otsuka Electronics Co., Ltd and determined by the cumulant analysis method, the polyester resin obtained by using this catalyst solution for polyester production has low solution haze and few foreign substances. In other words, the polyester resin having few foreign substances included in the resulting polyester resin is obtained by using the catalyst solution for polyester production, which includes the titanium compound (A) and the organic solvent (B) and has the particle diameter of not greater than 200 nm measured by the dynamic light scattering method of the solution and determined by the cumulant analysis method.

Additionally, with respect to preferred embodiments of the invention, these results indicate the following.

The above results of Examples and Comparative Examples also show that the polyester resin obtained by using the catalyst solution for polyester production containing the compound (C) has low solution haze, few foreign substances, small color tone b value and little yellowing.

The results of Examples 2 to 6 and Comparative Examples 1 and 2 show that the molar ratio (C/A) of the compound (C) to the titanium compound (A) is preferably not less than 0.01 and less than 1.0, is more preferably not less than 0.01 and not greater than 0.75, is furthermore preferably not less than 0.1 and not greater than 0.75, is especially preferably not less than 0.1 and not greater than 0.5 and is most preferably not less than 0.1 and not greater than 0.25, in terms of enabling further reduction of foreign substances in the polyester resin.

The results of Examples 7 and 8 and Comparative Example 3 show that the water content of the mixed solution of the organic solvent (B) and the compound (C) prior to addition of the titanium compound (A) in the catalyst solution for polyester production is preferably not greater than 0.05% by weight and is especially preferably not greater than 0.03% by weight, in terms of enabling further reduction of foreign substances in the polyester resin.

The results of Examples 8 to 10 and 22 show that the temperature of the mixed solution of the organic solvent (B) and the compound (C) prior to addition of the titanium compound (A) in the catalyst solution for polyester production is preferably not higher than 100°C, is more preferably not higher than 80°C and is especially preferably not higher than 60°C, in terms of enabling further reduction of foreign substances in the polyester resin.

The results of Examples 10 and 11 show that the molar ratio of the diol component (E) to the dicarboxylic acid component (D-1) is in the range of 1.1 to 1.8, in terms of shortening the reaction time of the esterification reaction and the reaction time of the polycondensation reaction.

The results of Examples 7, 12, 14 and 15 show that the content of the titanium compound (A) in the catalyst solution for polyester production is preferably not greater than 10% by weight, is more preferably not greater than 1.0% by weight and is especially preferably not greater than 0.5% by weight, in terms of enabling further reduction of foreign substances in the polyester resin.

The results of Examples 6, 17 to 18 and Reference Examples 16 and 25 show that HMP including one or more oxygen atoms that are the atoms having unshared electron pair is preferably used as the compound (C), in terms of enabling further reduction of foreign substances in the polyester resin.

The results of Examples 1 to 25 and Comparative Examples 1 to 3 show that addition of the compound (C) in the catalyst solution for polyester production improves the long term stability.

### [Example 26]

The organic solvent (B) used was 1,4-butanediol (BDO) (manufactured by Tokyo Chemical Industry Co., Ltd). More specifically, the procedure added 2.5 mL of concentrated hydrochloric acid (manufactured by Tokyo Chemical Industry Co., Ltd.) to 150 g of BDO having the initial water content of 0.08% by weight measured by the method (2) described above, so as to obtain adjusted BDO having the pH, which was measured by the method (3) described above, adjusted to 0.5 and the water content adjusted to 1.4% by weight. The procedure mixed 3 g (8.8×10⁻³ mol) of tetra-n-butoxytitanium (TBT) (manufactured by Tokyo Chemical Industry Co., Ltd.) as the titanium compound (A) with 27 g of the adjusted BDO, so as to obtain a catalyst solution for polyester production having the content of the titanium compound (A) adjusted to 10.0% by weight. The particle diameter in this catalyst solution for polyester production measured by the method (1) described above was 70 nm.

The molar ratio ((E)/ (D-1)) of the diol component (E) to the dicarboxylic acid component (D-1) in the esterification reaction was 1.7. The dicarboxylic acid component (D-1) used was 780 g of terephthalic acid, and the diol component (E) used was 720 g of BDO. As the esterification reaction catalyst, 5.1 mL of the above catalyst solution for polyester production was used, such that the addition amount of TBT was 1.5×10⁻⁴ mol relative to 100 g of the resulting polyester resin (0.05 parts by weight relative to 100 parts by weight of the polyester resin). These raw materials and the esterification reaction catalyst were placed in a reactor with a rectifying column, and the esterification reaction was started at the temperature of 160°C and under ordinary pressure of 101 kPa. The temperature was then gradually raised, and the esterification reaction was performed eventually under the condition of the temperature of 225°C. Completion of the esterification reaction was confirmed, for example, based on the state of the distillate, so that the reaction time of the esterification reaction was 315 minutes. As the polycondensation reaction catalyst, 0.5 mL of the above catalyst solution for polyester production was used and added to the obtained reactant, such that the addition amount of TBT was 1.5×10⁻⁴ mol relative to 100 g of the resulting polyester resin (0.05 parts by weight relative to 100 parts by weight of the polyester resin). The polycondensation reaction was performed under the conditions of the temperature of 245°C and the pressure of 100 Pa. Completion of the polycondensation reaction was confirmed, for example, based on the viscosity of the reactant, so that the reaction time of the polycondensation reaction to obtain a polyester resin was 150 minutes. The content of the titanium compound (A) relative to 100 g of the resulting polyester resin measured by the element analysis method was 3.0×10⁻⁴ mol.

### [Example 27]

A catalyst solution for polyester production was prepared in the same manner as Example 26 with the following exceptions: using concentrated hydrochloric acid was replaced by using 2.0 mL of an aqueous solution obtained by diluting the used concentrated hydrochloric acid by 25 times; and the pH of BDO measured by the method (3) described above was adjusted to 1.5, with respect to preparation of the catalyst solution for polyester production in Example 26. This resulted in obtaining the catalyst solution for polyester production having the particle diameter of 90 nm measured by the method (1) described above. The esterification reaction and the polycondensation reaction were performed to obtain a polyester resin in the same manner as Example 26 with the following exceptions: the catalyst solution for polyester production described above was used in place of the catalyst solution for polyester production used in Example 26; and the reaction time of the esterification reaction was 270 minutes.

### [Example 28]

A catalyst solution for polyester production was prepared in the same manner as Example 27 with the following exceptions: using concentrated hydrochloric acid was replaced by using 2.0 mL of an aqueous solution obtained by diluting the used concentrated hydrochloric acid by 100 times; and the pH of BDO measured by the method (3) described above was adjusted to 3.5, with respect to preparation of the catalyst solution for polyester production in Example 27. This resulted in obtaining the catalyst solution for polyester production having the particle diameter of 180 nm measured by the method (1) described above. The esterification reaction and the polycondensation reaction were performed to obtain a polyester resin in the same manner as Example 27 with the following exceptions: the catalyst solution for polyester production described above was used in place of the catalyst solution for polyester production used in Example 27; and the reaction time of the polycondensation reaction was 155 minutes.

### [Reference Example 29]

A catalyst solution for polyester production was prepared in the same manner as Example 26 with the following exceptions: using concentrated hydrochloric acid was replaced by using 2.0 mL of an aqueous solution obtained by diluting an aqueous solution, which had 20 g of sodium hydroxide (manufactured by Tokyo Chemical Industry Co., Ltd.) dissolved in 50 mL of water, by 800 times; and the pH of BDO measured by the method (3) described above was adjusted to 10.5, with respect to preparation of the catalyst solution for polyester production in Example 26. This resulted in obtaining the catalyst solution for polyester production having the particle diameter of 200 nm measured by the method (1) described above. The esterification reaction and the polycondensation reaction were performed to obtain a polyester resin in the same manner as Example 26 with the following exceptions: the catalyst solution for polyester production described above was used in place of the catalyst solution for polyester production used in Example 26; and the reaction time of the polycondensation reaction was 175 minutes.

### [Reference Example 30]

A catalyst solution for polyester production was prepared in the same manner as Reference Example 29 with the following exceptions: 2.2 mL of the aqueous solution, which had 20 g of sodium hydroxide (manufactured by Tokyo Chemical Industry Co., Ltd.) dissolved in 50 mL of water, was used without dilution; and the pH of BDO measured by the method (3) described above was adjusted to 13.5, with respect to preparation of the catalyst solution for polyester production in Reference Example 29. This resulted in obtaining the catalyst solution for polyester production having the particle diameter of 130 nm measured by the method (1) described above. The esterification reaction and the polycondensation reaction were performed to obtain a polyester resin in the same manner as Reference Example 29 with the following exceptions: the catalyst solution for polyester production described above was used in place of the catalyst solution for polyester production used in Reference Example 29; and the reaction time of the esterification reaction was 345 minutes.

### [Example 31]

A catalyst solution for polyester production was prepared in the same manner as Example 27 with the following exceptions: the organic solvent (B) used for the catalyst solution for polyester production was changed to ethylene glycol (EG) (manufactured by Tokyo Chemical Industry Co., Ltd.) having the initial water content of 0.05% by weight measured by the method (2) described above; the pH of EG measured by the method (3) described above was adjusted to 1.5; and the water content of EG was adjusted to 1.4% by weight, with respect to preparation of the catalyst solution for polyester production in Example 27. This resulted in obtaining the catalyst solution for polyester production having the particle diameter of 190 nm measured by the method (1) described above. The esterification reaction and the polycondensation reaction were performed to obtain a polyester resin in the same manner as Example 27 with the following exceptions: the catalyst solution for polyester production described above was used in place of the catalyst solution for polyester production used in Example 27; and the reaction time of the polycondensation reaction was 175 minutes.

### [Example 32]

A catalyst solution for polyester production was prepared in the same manner as Example 31 with the following exceptions: the organic solvent (B) used for the catalyst solution for polyester production was changed to 1,5-pentanediol (PDO) (manufactured by Tokyo Chemical Industry Co., Ltd.) having the initial water content of 0.1% by weight measured by the method (2) described above; the pH of PDO measured by the method (3) described above was adjusted to 1.5; and the water content of PDO was adjusted to 1.4% by weight, with respect to preparation of the catalyst solution for polyester production in Example 31. This resulted in obtaining the catalyst solution for polyester production having the particle diameter of 200 nm measured by the method (1) described above. The esterification reaction and the polycondensation reaction were performed to obtain a polyester resin in the same manner as Example 31 with the following exception: the catalyst solution for polyester production described above was used in place of the catalyst solution for polyester production used in Example 31.

### [Example 33]

A catalyst solution for polyester production was prepared in the same manner as Example 26 with the following exceptions: using concentrated hydrochloric acid was replaced by adding 0.21 mL of an aqueous solution obtained by diluting the used concentrated hydrochloric acid by 8.5 times to 150 g of BDO having the initial water content of 0.01% by weight measured by the method (2) described above; the pH of BDO measured by the method (3) described above was adjusted to 2.0; and the water content of BDO was adjusted to 0.15% by weight, with respect to preparation of the catalyst solution for polyester production in Example 26. This resulted in obtaining the catalyst solution for polyester production having the particle diameter of 100 nm measured by the method (1) described above. The esterification reaction and the polycondensation reaction were performed to obtain a polyester resin in the same manner as Example 26 with the following exceptions: the catalyst solution for polyester production described above was used in place of the catalyst solution for polyester production used in Example 26; the reaction time of the esterification reaction was 270 minutes; and the reaction time of the polycondensation reaction was 145 minutes.

### [Example 34]

A catalyst solution for polyester production was prepared in the same manner as Example 33 with the following exceptions: the dilatation factor of concentrated hydrochloric acid was changed to 9 times; the volume of addition of this diluted aqueous solution was changed to 0.72 mL; the pH of BDO measured by the method (3) described above was adjusted to 1.5; and the water content of BDO was adjusted to 0.5% by weight, with respect to preparation of the catalyst solution for polyester production in Example 33. This resulted in obtaining the catalyst solution for polyester production having the particle diameter of 50 nm measured by the method (1) described above. The esterification reaction and the polycondensation reaction were performed to obtain a polyester resin in the same manner as Example 33 with the following exception: the catalyst solution for polyester production described above was used in place of the catalyst solution for polyester production used in Example 33.

### [Example 35]

A catalyst solution for polyester production was prepared in the same manner as Example 34 with the following exceptions: the initial water content of used BDO measured by the method (2) described above was adjusted and changed to 0.3% by weight; the pH of BDO measured by the method (3) described above was adjusted to 1.5; and the water content of BDO was adjusted to 0.8% by weight, with respect to preparation of the catalyst solution for polyester production in Example 34. This resulted in obtaining the catalyst solution for polyester production having the particle diameter of 40 nm measured by the method (1) described above. The esterification reaction and the polycondensation reaction were performed to obtain a polyester resin in the same manner as Example 34 with the following exception: the catalyst solution for polyester production described above was used in place of the catalyst solution for polyester production used in Example 34.

### [Example 36]

A catalyst solution for polyester production was prepared in the same manner as Example 34 with the following exceptions: the initial water content of used BDO measured by the method (2) described above was adjusted and changed to 0.5% by weight; the pH of BDO measured by the method (3) described above was adjusted to 1.5; and the water content of BDO was adjusted to 1.0% by weight, with respect to preparation of the catalyst solution for polyester production in Example 34. This resulted in obtaining the catalyst solution for polyester production having the particle diameter of 80 nm measured by the method (1) described above. The esterification reaction and the polycondensation reaction were performed to obtain a polyester resin in the same manner as Example 34 with the following exceptions: the catalyst solution for polyester production described above was used in place of the catalyst solution for polyester production used in Example 34; and the reaction time of the polycondensation reaction was 155 minutes.

### [Example 37]

A catalyst solution for polyester production was prepared in the same manner as Example 27 with the following exceptions: the initial water content of used BDO measured by the method (2) described above was adjusted and changed to 1.2% by weight; the pH of BDO measured by the method (3) described above was adjusted to 1.5; and the water content of BDO was adjusted to 2.5% by weight, with respect to preparation of the catalyst solution for polyester production in Example 27. This resulted in obtaining the catalyst solution for polyester production having the particle diameter of 130 nm measured by the method (1) described above. The esterification reaction and the polycondensation reaction were performed to obtain a polyester resin in the same manner as Example 27 with the following exception: the catalyst solution for polyester production described above was used in place of the catalyst solution for polyester production used in Example 27.

### [Reference Example 38]

A catalyst solution for polyester production was prepared in the same manner as Example 36 with the following exceptions: using the aqueous solution of hydrochloric acid was replaced by using pure water; and the pH of BDO measured by the method (3) described above was adjusted to 5.5, with respect to preparation of the catalyst solution for polyester production in Example 36. This resulted in obtaining the catalyst solution for polyester production having the particle diameter of 200 nm measured by the method (1) described above. The esterification reaction and the polycondensation reaction were performed to obtain a polyester resin in the same manner as Example 36 with the following exceptions: the catalyst solution for polyester production described above was used in place of the catalyst solution for polyester production used in Example 36; and the reaction time of the polycondensation reaction was 175 minutes.

### [Reference Example 39]

The esterification reaction and the polycondensation reaction were performed to obtain a polyester resin in the same manner as Reference Example 38 with the following exceptions: the molar ratio ((E)/(D-1)) of the diol component (E) to the dicarboxylic acid component (D-1) in the esterification reaction was changed to 2.0; the amount of BDO used as the diol component (E) was changed to 850 g; and the reaction time of the polycondensation reaction was 190 minutes, with respect to the esterification reaction and the polycondensation reaction of Reference Example 38.

### [Example 40]

A catalyst solution for polyester production was prepared in the same manner as Example 27 with the following exceptions: 24 g of BDO subjected to adjustment of the pH and the water content was mixed with 6 g of TBT; and the content of the titanium compound (A) was changed to 20.0% by weight, with respect to preparation of the catalyst solution for polyester production in Example 27. This resulted in obtaining the catalyst solution for polyester production having the particle diameter of 140 nm measured by the method (1) described above. The esterification reaction was performed in the same manner as Example 27 with the following exceptions: the amount of BDO used as the diol component (E) in the esterification reaction was changed to 1245 g; and the volume of the above catalyst solution for polyester production used as the esterification reaction catalyst was changed to 4.2 mL, such that the addition amount of TBT was 1.5×10⁻⁴ mol relative to 100 g of the resulting polyester resin (0.05 parts by weight relative to 100 parts by weight of the polyester resin). The polycondensation reaction was also performed to obtain a polyester resin in the same manner as Example 27 with the following exception: the volume of the above catalyst solution for polyester production used as the polycondensation reaction catalyst was changed to 0.25 mL, such that the addition amount of TBT was 1.5×10⁻⁴ mol relative to 100 g of the resulting polyester resin (0.05 parts by weight relative to 100 parts by weight of the polyester resin).

### [Example 41]

A catalyst solution for polyester production was prepared in the same manner as Example 27 with the following exceptions: 99 g of BDO subjected to adjustment of the pH and the water content was mixed with 1 g of TBT; and the content of the titanium compound (A) was changed to 1.0% by weight, with respect to preparation of the catalyst solution for polyester production in Example 27. This resulted in obtaining the catalyst solution for polyester production having the particle diameter of 30 nm measured by the method (1) described above. The esterification reaction was performed in the same manner as Example 27 with the following exceptions: the amount of BDO used as the diol component (E) in the esterification reaction was changed to 670 g; and the volume of the above catalyst solution for polyester production used as the esterification reaction catalyst was changed to 51 mL, such that the addition amount of TBT was 1.5×10⁻⁴ mol relative to 100 g of the resulting polyester resin (0.05 parts by weight relative to 100 parts by weight of the polyester resin). The polycondensation reaction was also performed to obtain a polyester resin in the same manner as Example 27 with the following exceptions: the volume of the above catalyst solution for polyester production used as the polycondensation reaction catalyst was changed to 4.9 mL, such that the addition amount of TBT was 1.5×10⁻⁴ mol relative to 100 g of the resulting polyester resin (0.05 parts by weight relative to 100 parts by weight of the polyester resin); and the reaction time of the polycondensation reaction was 145 minutes.

### [Example 42]

A catalyst solution for polyester production was prepared in the same manner as Example 27 with the following exceptions: 499 g of BDO subjected to adjustment of the pH and the water content was mixed with 1 g of TBT; and the content of the titanium compound (A) was changed to 0.2% by weight, with respect to preparation of the catalyst solution for polyester production in Example 27. This resulted in obtaining the catalyst solution for polyester production having the particle diameter of 0 nm measured by the method (1) described above, i.e., having no detection of the particle diameter. The esterification reaction was performed in the same manner as Example 27 with the following exceptions: the amount of BDO used as the diol component (E) in the esterification reaction was changed to 465 g; and the volume of the above catalyst solution for polyester production used as the esterification reaction catalyst was changed to 255 mL, such that the addition amount of TBT was 1.5×10⁻⁴ mol relative to 100 g of the resulting polyester resin (0.05 parts by weight relative to 100 parts by weight of the polyester resin). The polycondensation reaction was also performed to obtain a polyester resin in the same manner as Example 27 with the following exceptions: the volume of the above catalyst solution for polyester production used as the polycondensation reaction catalyst was changed to 25 mL, such that the addition amount of TBT was 1.5×10⁻⁴ mol relative to 100 g of the resulting polyester resin (0.05 parts by weight relative to 100 parts by weight of the polyester resin); and the reaction time of the polycondensation reaction was 145 minutes.

### [Example 43]

A catalyst solution for polyester production was prepared in the same manner as Example 35 with the following exceptions: 499 g of BDO subjected to adjustment of the pH and the water content was mixed with 1 g of TBT; and the content of the titanium compound (A) was changed to 0.2% by weight, with respect to preparation of the catalyst solution for polyester production in Example 35. This resulted in obtaining the catalyst solution for polyester production having the particle diameter of 0 nm measured by the method (1) described above, i.e., having no detection of the particle diameter. The esterification reaction was performed in the same manner as Example 35 with the following exceptions: the amount of BDO used as the diol component (E) in the esterification reaction was changed to 465 g; and the volume of the above catalyst solution for polyester production used as the esterification reaction catalyst was changed to 255 mL, such that the addition amount of TBT was 1.5×10⁻⁴ mol relative to 100 g of the resulting polyester resin (0.05 parts by weight relative to 100 parts by weight of the polyester resin). The polycondensation reaction was also performed to obtain a polyester resin in the same manner as Example 35 with the following exception: the volume of the above catalyst solution for polyester production used as the polycondensation reaction catalyst was changed to 25 mL, such that the addition amount of TBT was 1.5×10⁻⁴ mol relative to 100 g of the resulting polyester resin (0.05 parts by weight relative to 100 parts by weight of the polyester resin).

### [Reference Example 44]

A catalyst solution for polyester production was prepared in the same manner as Example 43 with the following exceptions: adjustment of the pH and the water content was not performed: the water content of BDO measured by the method (2) described above was changed to 0.06% by weight; and the pH of BDO measured by the method (3) described above was changed to 5.5, with respect to preparation of the catalyst solution for polyester production in Example 43. This resulted in obtaining the catalyst solution for polyester production having the particle diameter of 10 nm measured by the method (1) described above. The esterification reaction and the polycondensation reaction were performed to obtain a polyester resin in the same manner as Example 43 with the following exception: the catalyst solution for polyester production described above was used in place of the catalyst solution for polyester production used in Example 43.

### [Comparative Example 4]

A catalyst solution for polyester production was prepared in the same manner as Example 27 with the following exceptions: using the aqueous solution of hydrochloric acid was replaced by using pure water; and the pH of BDO measured by the method (3) described above was adjusted to 5.5, with respect to preparation of the catalyst solution for polyester production in Example 27. This resulted in obtaining the catalyst solution for polyester production having the particle diameter of 250 nm measured by the method (1) described above. The esterification reaction and the polycondensation reaction were performed to obtain a polyester resin in the same manner as Example 27 with the following exceptions: the catalyst solution for polyester production described above was used in place of the catalyst solution for polyester production used in Example 27; and the reaction time of the polycondensation reaction was 175 minutes.

### [Comparative Example 5]

A catalyst solution for polyester production was prepared in the same manner as Example 33 with the following exceptions: the aqueous solution of hydrochloric acid was not added; the water content of BDO measured by the method (2) described above was changed to 0.01% by weight; and the pH of BDO measured by the method (3) described above was changed to 5.5, with respect to preparation of the catalyst solution for polyester production in Example 33. This resulted in obtaining the catalyst solution for polyester production having the particle diameter of 400 nm measured by the method (1) described above. The esterification reaction and the polycondensation reaction were performed to obtain a polyester resin in the same manner as Example 33 with the following exceptions: the catalyst solution for polyester production described above was used in place of the catalyst solution for polyester production used in Example 33; and the reaction time of the polycondensation reaction was 175 minutes.

### [Comparative Example 6]

A catalyst solution for polyester production was prepared in the same manner as Example 37 with the following exceptions: using the aqueous solution of hydrochloric acid was replaced by using pure water; and the pH of BDO measured by the method (3) described above was changed to 5.5, with respect to preparation of the catalyst solution for polyester production in Example 37. This resulted in obtaining the catalyst solution for polyester production having the particle diameter of 350 nm measured by the method (1) described above. The esterification reaction and the polycondensation reaction were performed to obtain a polyester resin in the same manner as Example 37 with the following exceptions: the catalyst solution for polyester production described above was used in place of the catalyst solution for polyester production used in Example 37; and the reaction time of the polycondensation reaction was 175 minutes.

### [Comparative Example 7]

A catalyst solution for polyester production was prepared in the same manner as Example 37 with the following exceptions: using the aqueous solution of hydrochloric acid was replaced by using pure water; the addition volume of pure water was changed to 4.4 mL; the pH of BDO measured by the method (3) described above was changed to 5.5; and the water content of BDO measured by the method (2) described above was changed to 4.0% by weight, with respect to preparation of the catalyst solution for polyester production in Example 37. This resulted in obtaining the clouded and gelating catalyst solution for polyester production having the particle diameter of 2500 nm measured by the method (1) described above. The esterification reaction was performed in the same manner as Example 37 by using the clouded and gelating catalyst solution for polyester production, in place of the catalyst solution for polyester production used in Example 37, but the esterification reaction was not completed.

### [Comparative Example 8]

Based on Example 1 of Patent Document 1 (JP 2001-168635A), 0.6 g of acetic acid (manufactured by Tokyo Chemical Industry Co., Ltd.) was added to 571.3 parts by weight of ethylene glycol (EG) (manufactured by Tokyo Chemical Industry Co., Ltd.) having the initial water content of 0.07% by weight measured by the method (2) described above. The pH measured by the method (3) described above was 2.2. The procedure then added 24.0 parts by weight of a solution of monobutyl phosphate (manufactured by Tokyo Chemical Industry Co., Ltd.), which was adjusted to 15.5% by weight in ethylene glycol, to this solution and was mixed with stirring. After that, 4.1 parts by weight (1.2×10⁻² mol) of tetra-n-butoxytitanium (TBT) (manufactured by Tokyo Chemical Industry Co., Ltd.) was further added little by little. The temperature was then gradually raised under nitrogen atmosphere, and the mixture was kept with stirring at the temperature of 120°C for one hour. The procedure subsequently cooled down the obtained suspension to room temperature. The mean particle diameter of the catalyst particles in the catalyst solution measured by the method (1) described above was 7400 nm.

The molar ratio ((E)/ (D-1)) of the diol component (E) to the dicarboxylic acid component (D-1) in the esterification reaction was 1.7. The dicarboxylic acid component (D-1) used was 780 g of terephthalic acid, and the diol component (E) used was 720 g of BDO. As the esterification reaction catalyst, 7.5 mL of the above catalyst solution was used, such that the addition amount of TBT was 1.5×10⁻⁴ mol relative to 100 g of the resulting polyester resin (0.05 parts by weight relative to 100 parts by weight of the polyester resin). These raw materials and the esterification reaction catalyst were placed in a reactor with a rectifying column, and the esterification reaction was started at the temperature of 160°C and under ordinary pressure of 101 kPa. The temperature was then gradually raised, and the esterification reaction was performed eventually under the condition of the temperature of 225°C. The esterification reaction was, however, not completed.

### [Comparative Example 9]

Based on Example 3 of Patent Document 2 (JP 2002-308973A), an ethylene glycol slurry catalyst having 1.5% by weight of α-titanium phosphate was produced by using α-titanium phosphate having the mean particle diameter of 0.3 µm.

The molar ratio ((E)/ (D-1)) of the diol component (E) to the dicarboxylic acid component (D-1) in the esterification reaction was 1.7. The dicarboxylic acid component (D-1) used was 780 g of terephthalic acid, and the diol component (E) used was 720 g of BDO. As the esterification reaction catalyst, 33.3 mL of the above slurry catalyst was used, such that the addition amount of TBT was 1.5×10⁻⁴ mol relative to 100 g of the resulting polyester resin (0.05 parts by weight relative to 100 parts by weight of the polyester resin). These raw materials and the esterification reaction catalyst were placed in a reactor with a rectifying column, and the esterification reaction was started at the temperature of 160°C and under ordinary pressure of 101 kPa. The temperature was then gradually raised, and the esterification reaction was performed eventually under the condition of the temperature of 225°C. The esterification reaction was, however, not completed.

### [Comparative Example 10]

Based on Example 1 of Patent Document 4 (JP 2004-189962), the procedure dissolved 532 g of citric acid hydrate (manufactured by Tokyo Chemical Industry Co., Ltd.) in 371 g of warm water and added 288 g of tetraisopropoxytitanium (TPT) (manufactured by Tokyo Chemical Industry Co., Ltd.) to this solution little by little. This mixture was heated and refluxed for 1 hour to obtain a cloudy solution. A mixture of isopropyl alcohol and water was distilled out from this cloudy solution under vacuum. The remaining product was cooled down to temperature lower than 70°C, and an aqueous solution containing 32% by weight of NaOH was added to the product solution little by little. The product obtained was filtrated, was subsequently mixed with 504 g of ethylene glycol (EG) (manufactured by Tokyo Chemical Industry Co., Ltd.) having the initial water content of 0.07% by weight and was heated under vacuum. This removed isopropyl alcohol and water, and a slightly cloudy pale yellow product (Ti content of 3.85% by weight = TPT equivalent of 22.8% by weight) was obtained. A TPT catalyst solution including a phosphorus-containing titanium compound was prepared by adding an aqueous solution having the phosphoric acid content of 85% by weight to this mixed solution. The pH of this solution measured by the method (3) described above was 5.0, and the particle diameter included in the solution measured by the method (1) described above was 450 nm.

The molar ratio ((E)/ (D-1)) of the diol component (E) to the dicarboxylic acid component (D-1) in the esterification reaction was 1.7. The dicarboxylic acid component (D-1) used was 780 g of terephthalic acid, and the diol component (E) used was 720 g of BDO. As the esterification reaction catalyst, 2.0 g of the TPT catalyst solution was used, such that the addition amount of TPT was 1.5×10⁻⁴ mol relative to 100 g of the resulting polyester resin (0.05 parts by weight relative to 100 parts by weight of the polyester resin). These raw materials and the esterification reaction catalyst were placed in a reactor with a rectifying column, and the esterification reaction was started at the temperature of 160°C and under ordinary pressure of 101 kPa. The temperature was then gradually raised, and the esterification reaction was performed eventually under the condition of the temperature of 225°C. Completion of the esterification reaction was confirmed, for example, based on the state of the distillate, so that the reaction time of the esterification reaction was 285 minutes. As the polycondensation reaction catalyst, 0.20 g of the TPT catalyst solution was added to the obtained reactant, such that the addition amount of TPT was 1.5×10⁻⁴ mol relative to 100 g of the resulting polyester resin (0.05 parts by weight relative to 100 parts by weight of the polyester resin). The polycondensation reaction was performed under the conditions of the temperature of 245°C and the pressure of 100 Pa. Completion of the polycondensation reaction was confirmed, for example, based on the viscosity of the reactant, so that the reaction time of the polycondensation reaction to obtain a polyester resin was 175 minutes.

### [Comparative Example 11]

Based on Example 1 of Patent Document 5 (JP 2008-195845), 2250 parts by weight of ethylene glycol (EG) (manufactured by Tokyo Chemical Industry Co., Ltd.) having the initial water content of 0.07% by weight and 44 parts by weight of trimellitic acid anhydride were mixed with stirring. The pH measured by the method (3) described above was 1.5. The procedure added 39 parts by weight of tetra-n-butoxytitanium (TBT) (manufactured by Tokyo Chemical Industry Co., Ltd.) to this solution. Obtained was, however, not a transparent ethylene glycol solution of the titanium compound but a clouded catalyst solution. The particle diameter measured by the method (1) described above was 1000 nm.

The molar ratio ((E)/ (D-1)) of the diol component (E) to the dicarboxylic acid component (D-1) in the esterification reaction was 1.7. The dicarboxylic acid component (D-1) used was 780 g of terephthalic acid, and the diol component (E) used was 720 g of BDO. As the esterification reaction catalyst, 30.0 mL of the above catalyst solution was used, such that the addition amount of TBT was 1.5×10⁻⁴ mol relative to 100 g of the resulting polyester resin (0.05 parts by weight relative to 100 parts by weight of the polyester resin). These raw materials and the esterification reaction catalyst were placed in a reactor with a rectifying column, and the esterification reaction was started at the temperature of 160°C and under ordinary pressure of 101 kPa. The temperature was then gradually raised, and the esterification reaction was performed eventually under the condition of the temperature of 225°C. The esterification reaction was, however, not completed.

The results of the respective Examines and Comparative Examples are collectively shown in Tables 3 and 4.

**[Table 3]**

| | Titanium Compound (A) | | | Organic Solvent (B) | | | Mixed Solution ot Titanium Compound (A) and Organic Solvent (B) | Long Term Stability |
|---|---|---|---|---|---|---|---|---|
| | Type | Content in Polymer | Concentration in Catalyst Solution | Type | pH | Water Content | Particle Diameter | |
| | | (mol/100 g of polymer) | (% by weight) | | | (% by weight) | (nm) | |
| EX 26 | TBT | 3.0×10⁻⁴ | 10.0 | BDO | 0. 5 | 1. 4 | 70 | No change in 3 months (Colorless and transparent) |
| EX 27 | TBT | 3. 0×10⁻⁴ | 10.0 | BDO | 1.5 | 1. 4 | 90 | No change in 3 months (Colorless and transparent) |
| EX 28 | TBT | 3.0×10⁻⁴ | 10.0 | BDO | 3.5 | 1. 4 | 180 | No change in 3 months (Colorless and transparent) |
| EX 29 * | TBT | 3.0×10⁻⁴ | 10.0 | BDO | 10 5 | 1. 4 | 200 | No change in 3 months (Colorless and transparent) |
| EX 30 * | TBT | 3.0×10⁻⁴ | 10.0 | BDO | 13.5 | 1. 4 | 130 | No change in 3 months (Colorless and transparent) |
| EX 31 | TBT | 3.0×10⁻⁴ | 10.0 | EG | 1. 5 | 1. 4 | 190 | No change in 3 months (Colorless and transparent) |
| EX 32 | TBT | 3.0×10⁻⁴ | 10.0 | PDO | 1. 5 | 1 4 | 200 | No change in 3 months (Colorless and transparent) |
| EX 33 | TBT | 3.0×10⁻⁴ | 10.0 | BDO | 2.0 | 0.15 | 100 | No change in 3 months (Colorless and transparent) |
| EX 34 | TBT | 3.0×10⁻⁴ | 10.0 | BDO | 1.5 | 0.5 | 50 | No change in 3 months (Colorless and transparent) |
| EX 35 | TBT | 3.0×10⁻⁴ | 10.0 | BDO | 1. 5 | 0. 8 | 40 | No change in 3 months (Colorless and transparent) |
| EX 36 | TBT | 3.0×10⁻⁴ | 10.0 | BDO | 1. 5 | 1.0 | 80 | No change in 3 months (Colorless and transparent) |
| EX 37 | TBT | 3.0×10⁻⁴ | 100 | BDO | 1.5 | 2.5 | 130 | No change in 3 months (Colorless and transparent) |
| EX 38 * | TBT | 3.0×10⁻⁴ | 10.0 | BDO | 5.5 | 1.0 | 200 | No change in 3 months (Colorless and transparent) |
| EX 39 * | TBT | 3.0×10⁻⁴ | 100 | BDO | 5.5 | 1.0 | 200 | No change in 3 months (Colorless and transparent) |
| EX 40 | TBT | 3.0×10⁻⁴ | 20.0 | BDO | 1. 5 | 1. 4 | 140 | No change in 3 months (Colorless and transparent) |
| EX 41 | TBT | 3.0×10⁻⁴ | 1.0 | BDO | 1. 5 | 1. 4 | 30 | No change in 3 months (Colorless and transparent) |
| EX 42 | TBT | 3.0×10⁻⁴ | 0.2 | BDO | 1.5 | 1. 4 | 0 | No change in 3 months (Colorless and transparent) |
| EX 43 | TBT | 3.0×10⁻⁴ | 0.2 | BDO | 1.5 | 0. 8 | 0 | No change in 3 months (Colorless and transparent) |
| EX 44 * | TBT | 3.0×10⁻⁴ | 0. 2 | BDO | 5.5 | 0.06 | 10 | No change in 3 months (Colorless and transparent) |
| COMP EX 4 | TBT | 3.0×10⁻⁴ | 10.0 | BDO | 5.5 | 1. 4 | 250 | No change in 3 months (Colorless and transparent) |
| COMP EX 5 | TBT | 3.0×10⁻⁴ | 10.0 | BDO | 5.5 | 0.01 | 400 | Clouded and precipitated after 1 week |
| COMP EX 6 | TBT | 3.0×10⁻⁴ | 10.0 | BDO | 5.5 | 2.5 | 350 | Clouded and precipitated after 1 week |
| COMP EX 7 | TBT | 3.0×10⁻⁴ | 10.0 | BDO | 5.5 | 4.0 | 2500 | Clouded and precipitated immediately after production of catalyst |
| COMP EX 8 | TBT | 3.0×10⁻⁴ | 6.4 | EG | 2.2 | 0. 07 | 7400 | Clouded and precipitated immediately after production of catalyst |
| COMP EX 9 | *α-*titanium phosphate | 3.0×10⁻⁴ | 1. 5 | EG | 5.0 | 0.07 | 300 | Clouded and precipitated immediately after production of catalyst |
| COMP EX 10 | TPT | 3.0×10⁻⁴ | 22.8 | EG | 5.0 | 0.07 | 450 | Clouded and precipitated after 1 month |
| COMP EX 11 | TBT | 3.0×10⁻⁴ | 1. 7 | EG | 1. 5 | 0.07 | 1000 | Clouded and precipitated immediately after production of catalyst |

| | | | | | | | | |
|---|---|---|---|---|---|---|---|---|
| *Reference examples | | | | | | | | |

**[Table 4]**

| | Molar Ratio | Reaction Time | | Esterification Characteristic | Polymer Characteristics | |
|---|---|---|---|---|---|---|
| | | Esterification Reaction | Polycondensation Reaction | Amount of By-product THF | Molecular Weight Mw | Solution Haze |
| | (E)/(D-1) | (minutes) | (minutes) | (g/kgPBT) | (10 thousands) | (%) |
| EX 26 | 1.7 | 315 | 150 | 190 | 1.5 | 0.8 |
| EX 27 | 1.7 | 270 | 150 | 90 | 2.4 | 1.0 |
| EX 28 | 1.7 | 270 | 155 | 90 | 2.4 | 1.2 |
| EX 29 * | 1.7 | 315 | 175 | 110 | 2.4 | 2.1 |
| EX 30 * | 1.7 | 345 | 175 | 140 | 2.4 | 1.6 |
| EX 31 | 1.7 | 270 | 175 | 95 | 2.4 | 2.0 |
| EX 32 | 1.7 | 270 | 175 | 95 | 2.4 | 2. 1 |
| EX 33 | 1.7 | 270 | 145 | 90 | 2.4 | 1. 1 |
| EX 34 | 1.7 | 270 | 145 | 90 | 2.4 | 0.8 |
| EX 35 | 1.7 | 270 | 145 | 90 | 2.4 | 0.7 |
| EX 36 | 1.7 | 270 | 155 | 90 | 2.4 | 1.0 |
| EX 37 | 1.7 | 270 | 150 | 95 | 2.4 | 1.6 |
| EX 38 * | 1.7 | 270 | 175 | 90 | 2.4 | 2.2 |
| EX 39 * | 2.0 | 270 | 190 | 100 | 2.4 | 2.3 |
| EX 40 | 1.7 | 270 | 150 | 90 | 2. 4 | 1.6 |
| EX 41 | 1.7 | 270 | 145 | 90 | 2.4 | 0.8 |
| EX 42 | 1.7 | 270 | 145 | 90 | 2.4 | 0.4 |
| EX 43 | 1.7 | 270 | 145 | 90 | 2.4 | 0.3 |
| EX 44 * | 1.7 | 270 | 145 | 90 | 2.5 | 0.3 |
| COMP EX 4 | 1.7 | 270 | 175 | 90 | 2.4 | 2.5 |
| COMP EX 5 | 1.7 | 270 | 175 | 100 | 2.4 | 4.3 |
| COMP EX 6 | 1.7 | 270 | 175 | 90 | 2.4 | 4.0 |
| COMP EX 7 | 1.7 | Reaction uncompleted | - | - | - | - |
| COMP EX 8 | 1.7 | Reaction uncompleted | - | - | - | - |
| COMP EX 9 | 1.7 | Reaction uncompleted | - | - | - | - |
| COMP EX 10 | 1. 7 | 285 | 175 | 95 | 2.4 | 3.5 |
| COMP EX 11 | 1.7 | Reaction uncompleted | - | - | - | - |

| | | | | | | |
|---|---|---|---|---|---|---|
| *Reference examples | | | | | | |

The above results of Examples and Comparative Examples show that when the catalyst solution for polyester production has the particle diameter of not greater than 200 nm measured by the dynamic light scattering method using the "zeta potential and particle size measurement system ELS-Z" manufactured by Otsuka Electronics Co., Ltd and determined by the cumulant analysis method, the catalyst solution for polyester production has the excellent long term stability and the polyester resin obtained by using this catalyst solution for polyester production has low solution haze and few foreign substances. In other words, the polyester resin having few foreign substances included in the resulting polyester resin is obtained by using the catalyst solution for polyester production, which includes the titanium compound (A) and the organic solvent (B) and has the particle diameter of not greater than 200 nm measured by the dynamic light scattering method of the solution and determined by the cumulant analysis method.

Additionally, with respect to preferred embodiments of the invention, these results indicate the following.

The results of Examples 26 to 28, Reference Examples 29 to 30 and Comparative Example 4 and the results of Example 37 and Comparative Example 6 show that pH adjustment of the organic solvent (B) in the catalyst solution for polyester production to be not greater than 3.5 or to be not less than 10.5 enables reduction of the particle diameter of the catalyst solution for polyester production measured by the dynamic light scattering method and determined by the cumulant analysis method and enables production of the polyester resin having low solution haze and few foreign substances. With respect to the esterification reactivity and the polycondensation reactivity, these results show that the pH adjustment in the range of 1.0 to 2.0 reduces the amount of the by-product tetrahydrofuran (THF) due to cyclization of 1,4-butanediol in the course of the esterification reaction and shortens the reaction time of the polycondensation reaction.

The results of Examples 27, 31 and 32 show that using 1,4-butanediol (BDO) as the organic solvent (B) for the catalyst solution for polyester production enables further reduction of the particle diameter of the catalyst solution for polyester production measured by the dynamic light scattering method and determined by the cumulant analysis method and enables production of the polyester resin having the less solution haze and less foreign substances.

The results of Examples 27 and 34 to 37 show that, when the organic solvent (B) used for the catalyst solution for polyester production and subjected to pH adjustment to 1.5 has the water content of 0.5 to 1.0% by weight, the catalyst solution for polyester production has the less particle diameter measured by the dynamic light scattering method and determined by the cumulant analysis method, and the resulting polyester resin has the less solution haze and less foreign substances.

The results of Reference Examples 38 and 39 show that the molar ratio ((E)/(D-1)) of the diol component (E) to the dicarboxylic acid component (D-1) in the range of 1.1 to 1.8 shortens the reaction time of the polycondensation reaction.

The results of Examples 27, 41 and 42 show that reduction of the content of the titanium compound (A) in the catalyst solution for polyester production to be not greater than 0.5% by weight causes no detection of the particle diameter of the catalyst solution for polyester production measured by the dynamic light scattering method and determined by the cumulant analysis method and enables production of the polyester resin having the less solution haze and less foreign substances.

The results of Examples 27, 42 and 43 show that using the catalyst solution for polyester production, which is obtained by using tetra-n-butoxy titanate (TBT) as the titanium compound (A) and 1,4-butanediol (BDO) as the organic solvent (B) and by adding the titanium compound (A) to have the content of not greater than 0.5% by weight after adjustment of the pH of BDO to 1.0 to 2.0 and adjustment of the water content to be not greater than 1.0% by weight, causes no detection of the particle diameter of the catalyst solution for polyester production measured by the dynamic light scattering method and determined by the cumulant analysis method and enables production of the polyester resin having low solution haze and especially few foreign substances. These results also show that using this catalyst solution shortens the reaction time of the polycondensation reaction and enables efficient production of the polyester resin.

## Claims

1. A catalyst solution for polyester production, comprising a titanium compound (A) and an organic solvent (B),
the catalyst solution further comprising a compound (C) that has either a pyrrole ring or a pyridine ring and includes one or more oxygen atoms, wherein
particle diameter of particles included in the solution, which is measured by dynamic light scattering method and is subsequently determined by cumulant analysis method, is not greater than 200 nm.

2. The catalyst solution for polyester production according to claim 1,
wherein
a content of the titanium compound (A) is not greater than 20% by weight.

3. The catalyst solution for polyester production according to either one of claims 1 and 2, wherein
the titanium compound (A) is a titanate or its condensation product shown by a formula: (R¹O)ₙTi(OR²)₄₋ₙ (wherein R¹ and R² in the formula are identical with or different from each other and respectively represent an aliphatic, alicyclic or aromatic hydrocarbon group containing 1 to 10 carbon atoms, wherein n indicates a range of 0 to 4 (including decimals)).

4. The catalyst solution for polyester production according to any one of claims 1 to 3, wherein
the organic solvent (B) is an alcohol shown by a formula: R³(OH)ₘ (wherein R³ in the formula represents an aliphatic, alicyclic or aromatic hydrocarbon group or a heterocyclic ring containing 1 to 10 carbon atoms, wherein m indicates either 1 or 2).

5. The catalyst solution for polyester production according to any one of claims 1 to 4, wherein
a molar ratio (C/A) of content of the compound (C) to content of the titanium compound (A) is not less than 0.01 and less than 1.0.

6. A production method of the catalyst solution for polyester production, the catalyst solution comprising a titanium compound (A) and an organic solvent (B), wherein particle diameter of particles includes in the solution, which is measured by dynamic light scattering method and is subsequently determined by the cumulant analysis method, is not greater than 200 nm,
the production method mixes the organic solvent (B) with the titanium compound (A) after adjustment of pH of the organic solvent (B) to be not greater than 3.5.

7. A polyester resin produced by an esterification reaction of a dicarboxylic acid component (D-1) consisting of a dicarboxylic acid and a diol component (E) or a transesterification reaction of a dicarboxylic acid component (D-2) consisting of an ester derivative of a dicarboxylic acid and a diol component (E) and a subsequent polycondensation reaction, wherein
the catalyst solution for polyester production according to any one of claims 1 to 5 is used as a reaction catalyst of the esterification reaction or the transesterification reaction and/or as a reaction catalyst of the polycondensation reaction.

8. A polyester resin produced by an esterification reaction of a dicarboxylic acid component (D-1) consisting of a dicarboxylic acid and a diol component (E) or a transesterification reaction of a dicarboxylic acid component (D-2) consisting of an ester derivative of a dicarboxylic acid and a diol component (E) and a subsequent polycondensation reaction, wherein
the catalyst solution for polyester production produced by the production method according to claim 6 is used as a reaction catalyst of the esterification reaction or the transesterification reaction and/or as a reaction catalyst of the polycondensation reaction.

9. A production method of a polyester resin,
the production method producing the polyester resin by an esterification reaction of a dicarboxylic acid component (D-1) consisting of a dicarboxylic acid and a diol component (E) or a transesterification reaction of a dicarboxylic acid component (D-2) consisting of an ester derivative of a dicarboxylic acid and a diol component (E) and a subsequent polycondensation reaction,
the production method using the catalyst solution for polyester production according to any one of claims 1 to 5 as a reaction catalyst of the esterification reaction or the transesterification reaction and/or as a reaction catalyst of the polycondensation reaction.

10. A production method of a polyester resin,
the production method producing the polyester resin by an esterification reaction of a dicarboxylic acid component (D-1) consisting of a dicarboxylic acid and a diol component (E) or a transesterification reaction of a dicarboxylic acid component (D-2) consisting of an ester derivative of a dicarboxylic acid and a diol component (E) and a subsequent polycondensation reaction,
the production method using the catalyst solution for polyester production produced by the production method according to claim 6 as a reaction catalyst of the esterification reaction or the transesterification reaction and/or as a reaction catalyst of the polycondensation reaction.

## Patentansprüche

1. Katalysatorlösung zur Polyesterherstellung, umfassend eine Titanverbindung (A) und ein organisches Lösungsmittel (B), wobei die Katalysatorlösung weiters eine Verbindung (C) umfasst, die entweder einen Pyrrolring oder einen Pyridinring aufweist und ein oder mehrere Sauerstoffatome umfasst, wobei der Teilchendurchmesser von in der Lösung enthaltenen Teilchen, der durch ein dynamisches Lichtstreuungsverfahren gemessen und in der Folge durch ein Kumulantenanalyseverfahren bestimmt wird, nicht größer als 200 nm ist.

2. Katalysatorlösung zur Polyesterherstellung nach Anspruch 1, wobei ein Gehalt der Titanverbindung (A) nicht größer als 20 Gew.-% ist.

3. Katalysatorlösung zur Polyesterherstellung nach einem der Ansprüche 1 bis 2, wobei die Titanverbindung (A) ein Titanat oder sein Kondensationsprodukt ist, das durch eine Formel (R¹O)ₙTi(OR²)₄₋ₙ dargestellt ist (wobei R¹ und R² in der Formel miteinander identisch oder voneinander verschieden sind und jeweils für eine aliphatische, alizyklische oder aromatische Kohlenwasserstoffgruppe stehen, die 1 bis 10 Kohlenstoffatome enthält, wobei n einen Bereich von 0 bis 4 (einschließlich Dezimalzahlen) anzeigt).

4. Katalysatorlösung zur Polyesterherstellung nach einem der Ansprüche 1 bis 3, wobei das organische Lösungsmittel (B) ein Alkohol ist, der durch eine Formel R³(OH)ₘ dargestellt ist (wobei R³ in der Formel für eine aliphatische, alizyklische oder aromatische Kohlenwasserstoffgruppe oder einen heterozyklischen Ring steht, die/der 1 bis 10 Kohlenstoffatome enthält, wobei m entweder 1 oder 2 anzeigt).

5. Katalysatorlösung zur Polyesterherstellung nach einem der Ansprüche 1 bis 4, wobei ein Molverhältnis (C/A) des Gehalts der Verbindung (C) zum Gehalt der Titanverbindung (A) nicht weniger als 0,01 und weniger als 1,0 beträgt.

6. Herstellverfahren der Katalysatorlösung zur Polyesterherstellung, wobei die Katalysatorlösung eine Titanverbindung (A) und ein organisches Lösungsmittel (B) umfasst, wobei der Teilchendurchmesser von in der Lösung enthaltenen Teilchen, der durch ein dynamisches Lichtstreuungsverfahren gemessen und in der Folge durch ein Kumulantenanalyseverfahren bestimmt wird, nicht größer als 200 nm ist, wobei in dem Herstellverfahren das organische Lösungsmittel (B) mit der Titanverbindung (A) vermischt wird, nachdem der pH des organischen Lösungsmittels (B) auf nicht höher als 3,5 eingestellt wurde.

7. Polyesterharz, hergestellt durch eine Veresterungsreaktion einer Dicarbonsäurekomponente (D-1), bestehend aus einer Dicarbonsäure und einer Diolkomponente (E), oder eine Umesterungsreaktion einer Dicarbonsäurekomponente (D-2), bestehend aus einem Esterderivat einer Dicarbonsäure und einer Diolkomponente (E), und eine darauffolgende Polykondensationsreaktion, wobei die Katalysatorlösung zur Polyesterherstellung nach einem der Ansprüche 1 bis 5 als Reaktionskatalysator der Veresterungsreaktion oder der Umesterungsreaktion und/oder als Reaktionskatalysator der Polykondensationsreaktion verwendet wird.

8. Polyesterharz, hergestellt durch eine Veresterungsreaktion einer Dicarbonsäurekomponente (D-1), bestehend aus einer Dicarbonsäure und einer Diolkomponente (E), oder eine Umesterungsreaktion einer Dicarbonsäurekomponente (D-2), bestehend aus einem Esterderivat einer Dicarbonsäure und einer Diolkomponente (E), und eine darauffolgende Polykondensationsreaktion, wobei die Katalysatorlösung zur Polyesterherstellung, die durch ein Herstellverfahren nach Anspruch 6 hergestellt wird, als Reaktionskatalysator der Veresterungsreaktion oder der Umesterungsreaktion und/oder als Reaktionskatalysator der Polykondensationsreaktion verwendet wird.

9. Herstellverfahren eines Polyesterharzes, wobei in dem Herstellverfahren das Polyesterharz durch eine Veresterungsreaktion einer Dicarbonsäurekomponente (D-1), bestehend aus einer Dicarbonsäure und einer Diolkomponente (E), oder eine Umesterungsreaktion einer Dicarbonsäurekomponente (D-2), bestehend aus einem Esterderivat einer Dicarbonsäure und einer Diolkomponente (E), und eine darauffolgende Polykondensationsreaktion hergestellt wird, wobei in dem Herstellverfahren die Katalysatorlösung zur Polyesterherstellung nach einem der Ansprüche 1 bis 5 als Reaktionskatalysator der Veresterungsreaktion oder der Umesterungsreaktion und/oder als Reaktionskatalysator der Polykondensationsreaktion verwendet wird.

10. Herstellverfahren eines Polyesterharzes, wobei in dem Herstellverfahren das Polyesterharz durch eine Veresterungsreaktion einer Dicarbonsäurekomponente (D-1), bestehend aus einer Dicarbonsäure und einer Diolkomponente (E), oder eine Umesterungsreaktion einer Dicarbonsäurekomponente (D-2), bestehend aus einem Esterderivat einer Dicarbonsäure und einer Diolkomponente (E), und eine darauffolgende Polykondensationsreaktion hergestellt wird, wobei in dem Herstellverfahren die Katalysatorlösung zur Polyesterherstellung, die durch ein Herstellverfahren nach Anspruch 6 hergestellt wird, als Reaktionskatalysator der Veresterungsreaktion oder Umesterungsreaktion und/oder als Reaktionskatalysator der Polykondensationsreaktion verwendet wird.

## Revendications

1. Solution de catalyseur pour la production de polyester, comprenant un composé du titane (A) et un solvant organique (B),
la solution de catalyseur comprenant en outre un composé (C) qui a soit un cycle pyrrole soit un cycle pyridine et qui contient un ou plusieurs atomes d'oxygène,
dans laquelle la granulométrie de particules incluses dans la solution, qui est mesurée par un procédé de diffusion dynamique de la lumière et est ensuite déterminé par un procédé d'analyse des cumulants, ne dépasse pas 200 nm.

2. Solution de catalyseur pour la production de polyester selon la revendication 1, dans laquelle la teneur en le composé du titane (A) ne dépasse pas 20 % en poids.

3. Solution de catalyseur pour la production de polyester selon l'une ou l'autre des revendications 1 et 2, dans laquelle le composé du titane (A) est un titanate ou son produit de condensation représenté par la formule : (R¹O)ₙTi(OR²)₄₋ₙ (où R¹ et R² dans la formule sont identiques ou différents et représentent respectivement un groupe hydrocarboné aliphatique, alicyclique ou aromatique contenant 1 à 10 atomes de carbone, et n est situé dans la plage allant de 0 à 4 (y compris les décimales)).

4. Solution de catalyseur pour la production de polyester selon l'une quelconque des revendications 1 à 3, dans laquelle le solvant organique (B) est un alcool représenté par la formule R³(OH)ₘ (où R³ dans la formule représente un groupe hydrocarboné aliphatique, alicyclique ou aromatique ou un hétérocycle contenant 1 à 10 atomes de carbone, et m indique soit 1 soit 2).

5. Solution de catalyseur pour la production de polyester selon l'une quelconque des revendications 1 à 4, dans laquelle le rapport molaire (C/A) de la teneur en le composé (C) à la teneur en le composé du titane (A) est d'au moins 0,01 et est inférieur à 1,0.

6. Procédé de production de la solution de catalyseur pour la production de polyester, la solution de catalyseur comprenant un composé du titane (A) et un solvant organique (B), dans lequel la granulométrie de particules incluses dans la solution, qui est mesuré par un procédé de diffusion dynamique de la lumière et est ensuite déterminé par un procédé d'analyse des cumulants, ne dépasse pas 200 nm,
lequel procédé de production comprend le mélange du solvant organique (B) avec le composé du titane (A) après ajustement du pH du solvant organique (B) de façon qu'il ne dépasse pas 3,5.

7. Résine de polyester produite par une réaction d'estérification d'un composant acide dicarboxylique (D-1) constitué d'un acide dicarboxylique et d'un composant diol (E) ou par une réaction de transestérification d'un composant acide dicarboxylique (D-2) constitué d'un dérivé ester d'un acide dicarboxylique et d'un composant diol (E), et par une réaction de polycondensation subséquente,
dans laquelle la solution de catalyseur pour la production de polyester selon l'une quelconque des revendications 1 à 5 est utilisée en tant que catalyseur réactionnel de la réaction d'estérification ou de la réaction de transestérification et/ou en tant que catalyseur réactionnel de la réaction de polycondensation.

8. Résine de polyester produite par une réaction d'estérification d'un composant acide dicarboxylique (D-1) constitué d'un acide dicarboxylique et d'un composant diol (E) ou par une réaction de transestérification d'un composant acide dicarboxylique (D-2) constitué d'un dérivé ester d'un acide dicarboxylique et d'un composant diol (E), et par une réaction de polycondensation subséquente,
dans laquelle la solution de catalyseur pour la production de polyester produite par le procédé selon la revendication 6 est utilisée en tant que catalyseur réactionnel de la réaction d'estérification ou de la réaction de transestérification et/ou en tant que catalyseur réactionnel de la réaction de polycondensation.

9. Procédé de production d'une résine de polyester, lequel procédé de production produit la résine de polyester par une réaction d'estérification d'un composant acide dicarboxylique (D-1) constitué d'un acide dicarboxylique et d'un composant diol (E) ou par une réaction de transestérification d'un composant acide dicarboxylique (D-2) constitué d'un dérivé ester d'un acide dicarboxylique et d'un composant diol (E), et par une réaction de polycondensation subséquente,
lequel procédé de production utilise la solution de catalyseur pour la production de polyester selon l'une quelconque des revendications 1 à 5 en tant que catalyseur réactionnel de la réaction d'estérification ou de la réaction de transestérification et/ou en tant que catalyseur réactionnel de la réaction de polycondensation.

10. Procédé de production d'une résine de polyester,
lequel procédé de production produit la résine de polyester par une réaction d'estérification d'un composant acide dicarboxylique (D-1) constitué d'un acide dicarboxylique et d'un composant diol (E) ou par une réaction de transestérification d'un composant acide dicarboxylique (D-2) constitué d'un dérivé ester d'un acide dicarboxylique et d'un composant diol (E), et par une réaction de polycondensation subséquente,
lequel procédé de production utilise la solution de catalyseur pour la production de polyester produite par le procédé selon la revendication 6 en tant que catalyseur réactionnel de la réaction d'estérification ou de la réaction de transestérification et/ou en tant que catalyseur réactionnel de la réaction de polycondensation.
